# EUROPEAN PATENT SPECIFICATION

(11) **EP 3 629 272 B1**
(45) Date of publication and mention of the grant of the patent: **20.10.2021**
(21) Application number: 18824895.9
(22) Date of filing: 05.05.2018
(51) Int. Cl.: G06Q 20/38, G06F 21/64

(54) **METHOD AND DEVICE FOR RUNNING CHAINCODE**
VERFAHREN UND VORRICHTUNG ZUR AUSFÜHRUNG EINES CHAINCODES
DISPOSITIF ET PROCÉDÉ D'EXÉCUTION D'UN CODE DE CHAÎNE

(30) Priority: 26.06.2017 CN 201710496967
(43) Date of publication of application: 01.04.2020
(73) Proprietor: Huawei Technologies Co., Ltd., Longgang District Shenzhen, Guangdong 518129 (CN)
(72) Inventor: JIANG, Yaoguo, Shenzhen Guangdong 518129 (CN); JIANG, Feihu, Shenzhen Guangdong 518129 (CN); XIE, Junan, Shenzhen Guangdong 518129 (CN); HU, Ruifeng, Shenzhen Guangdong 518129 (CN); DING, Haiyang, Shenzhen Guangdong 518129 (CN)
(74) Representative: Gill Jennings & Every LLP
(86) International application number: PCT/CN2018/085748
(87) International publication number: WO 2019/001139

(56) References cited:
- CN-A- 106 548 349
- CN-A- 106 603 698
- US-A1- 2017 140 408
- US-A1- 2017 140 408
- SANKAR LAKSHMI SIVA ET AL: "Survey of consensus protocols on blockchain applications", 2017 4TH INTERNATIONAL CONFERENCE ON ADVANCED COMPUTING AND COMMUNICATION SYSTEMS (ICACCS), IEEE, 6 January 2017 (2017-01-06), pages 1-5, XP033144744, DOI: 10.1109/ICACCS.2017.8014672 [retrieved on 2017-08-22]

## Description

### TECHNICAL FIELD

Embodiments of this application relate to the field of information technologies, and in particular, to a method and an apparatus for running a smart contract in the field of information technologies.

### BACKGROUND

Trades on the Internet almost all need to be handled with help of a credible third-party credit institution. However, in a blockchain technology, a unanimous direct payment can be achieved between both parties based on a cryptography principle without participation of a third-party intermediary. A blockchain is a distributed ledger and a decentralized database, and needs to be maintained by all nodes in a blockchain network together. In this specification, these nodes that can process ledger data are referred to as processing nodes. The blockchain includes a plurality of blocks (block). Each block includes several transaction records, and includes a hash value of a previous block. In this way, all the blocks are connected in sequence to constitute the blockchain. A smart contract (chaincode) is an important concept in the blockchain technology. The smart contract is an event-driven and stateful program that is run on a replicated and shared ledger and that can manage data in the ledger. The smart contract looks like a normal computer executable program. Code content of the smart contract specifies a transaction rule and transaction logic. When a user signs and invokes the smart contract, it means that the content of the contract is to be executed, and an execution result is to be written to the ledger.

Because the blockchain is a decentralized and trustless distributed ledger, processing nodes in the blockchain network do not trust each other, and there may be a malicious lying node. A consensus algorithm can be used to resolve this problem well. Each processing node in the blockchain network may be a malicious lying node, but when many nodes are clustered into one network, a result obtained through consensus among the nodes is a credible result. A main function of the consensus algorithm is to enable all the processing nodes in the blockchain network to record same content of a valid transaction block. In an existing PoE (proof of endorsement) consensus mechanism, when a client needs to run a smart contract, the client may first send a request for simulating running of the smart contract to a plurality of endorsement nodes, to simulate running of the smart contract. The endorsement nodes are also processing nodes, and are some nodes having an endorsement function in the processing nodes. The plurality of endorsement nodes run the smart contract, sign running results of the endorsement nodes, and then return the running results to the client (which is referred to as "endorsement" in this specification). Then the client encapsulates the plurality of running results of the plurality of endorsement nodes into a transaction message in a blockchain message format, and sends the transaction message to a consensus service node, to broadcast the transaction message to all the processing nodes (including the plurality of endorsement nodes) in the blockchain network by block by using the consensus service node. The processing nodes in the blockchain network check a received transaction, and only when the transaction meets a verification policy, consider the transaction as a valid transaction, and then modify data and write updated data to the blockchain. Herein, a user may set, based on an actual requirement of the user by using the client, a plurality of endorsement nodes to be trusted by the smart contract, and set a verification policy for the plurality of endorsement nodes. For example, a user A may have three endorsement nodes, a client A of the user A sends a request for simulating running of a smart contract to the three endorsement nodes, and receives three corresponding running results, and a verification policy may be that content of the three running results needs to be consistent, or may be that content of at least two running results needs to be consistent.

In an actual running process, the entire blockchain network is distributed, and each processing node in the blockchain network stores a piece of complete ledger data of the blockchain. However, because data is synchronized in sequence, blockchain data that is accessed by an endorsement node when the endorsement node runs a smart contract of a transaction is very likely to be inconsistent with data existing when the transaction subsequently needs to be written by each processing node in the blockchain network to a local ledger, leading to invalid endorsement of the endorsement node. Therefore, some mechanisms are required to avoid writing the transaction suffering invalid endorsement to the ledger.

In the prior art, a self-increasing version number is set for each piece of data of a smart contract, and every time the data is updated, the version number is modified once (for example, the version number is increased by 1). During running of the smart contract, if an endorsement node needs to access data that is stored in the blockchain for the smart contract, the endorsement node records a version number of the data that needs to be accessed. A running result returned by the endorsement node to a client includes the version number of the data. During checking, all the processing nodes in the blockchain network need to check whether the version number of the data in a transaction is consistent with version numbers of local ledger data, and when version numbers are consistent, determine the transaction as a valid transaction, and update the local ledger data.

However, when data of the blockchain is changed relatively frequently, for a transaction, a version number of data that is accessed by an endorsement node in a local ledger when the endorsement node runs a smart contract is very likely to be inconsistent with version numbers of data of all the processing nodes in the blockchain network that exist when the transaction is broadcast, by using the consensus service node, to the processing nodes for verification, causing the transaction to be invalid. In this case, a client needs to re-initiate the transaction, until version numbers of data are consistent and the transaction is valid and is written to a ledger. Therefore, according to the existing method, a success rate of writing a transaction to a ledger is relatively low.

SANKAR LAKSHMI SIVA ET AL in "Survey of consensus protocols on blockchain applications",2017 4TH INTERNATIONAL CONFERENCE ON ADVANCED COMPUTING AND COMMUNICATION SYSTEMS (ICACCS), IEEE, 6 January 2017 (2017-01-06), pages 1-5, disclose a comparative analysis of consensus protocols Stellar Consensus Protocol, Corda and Hyperledger.

US 2017/140408 A1 discloses facilitating operation of a smart contract rewards program and comprises smart contract logic to determine whether indicated user actions in a transaction meet a condition of the smart contract prior to validating a transaction record and initiate the rewarding process.

### SUMMARY

Embodiments of this application provide a method and an apparatus for running a smart contract, to increase a success rate of writing a transaction to a ledger, and improve overall system performance.

According to a first aspect, a method for running a smart contract is provided. The method is applied to a distributed network, and includes: receiving, by a processing node in the distributed network, a transaction sent by a consensus service node, where the transaction includes a plurality of running results generated in an endorsement process of the smart contract; checking, by the processing node, whether the plurality of running results meet a verification policy, where the checking includes checking version numbers and data that are in the plurality of running results and that are generated by a program other than a restrictive condition in the smart contract, and the restrictive condition indicates a condition to be met by ledger data in the distributed network when the smart contract is run; when the plurality of running results meet the verification policy, identifying, by the processing node, the restrictive condition in the smart contract, and determining whether local ledger data meets the restrictive condition; and when the local ledger data meets the restrictive condition, accepting, by the processing node, the transaction.

Specifically, code of the restrictive condition is usually code of a certain condition, in the smart contract, to be met by relatively frequently modified data, and for the plurality of running results received by the processing node, two cases may occur:
(1) The plurality of running results are results generated by running all programs of the smart contract. In other words, the plurality of running results each include data and a version number that are generated by running a program of the restrictive condition in the smart contract. In this case, the processing node may ignore version numbers and data that are in the plurality of running results and that are related to the restrictive condition, and check the version numbers and the data that are generated by the program other than the restrictive condition.
(2) The plurality of running results are version numbers and data that are generated by running the program other than the restrictive condition. In this case, the processing node may directly check the plurality of running results.

Therefore, regardless of whether the plurality of running results include the version numbers and the data that are generated by running the program of the restrictive condition, during checking, the processing node checks the version numbers and the data that are generated by the program other than the restrictive condition, and doesn't check the version numbers and the data that are generated by the program of the restrictive condition.

Specifically, when performing verification on the plurality of running results of the transaction according to the verification policy, the processing node in the distributed network first ignores verification that is based on the restrictive condition corresponding to relatively frequently changed data. After verifying the version numbers and the data that are in the plurality of running results and that are unrelated to the restrictive condition meet the verification policy, the processing node verifies whether the local ledger data meets the restrictive condition, and when the local ledger data meets the restrictive condition, accepts the transaction.

According to the method for running a smart contract in this embodiment of this application, verification that is based on the restrictive condition corresponding to the relatively frequently changed data is performed later. After verifying the version numbers and the data that are in the plurality of running results of the transaction and that are unrelated to the restrictive condition meet the verification policy, it is verified whether the local ledger data meets the restrictive condition. This increases a success rate of writing a transaction to a ledger, and improves overall system performance.

In a first possible implementation of the first aspect, the processing node is an endorsement node, and before the receiving, by a processing node, a transaction sent by a consensus service node, the method further includes: endorsing, by the processing node, the smart contract to obtain a running result of current endorsement; and sending, by the processing node, the running result of current endorsement to a client or a proxy node of the client, where the client or the proxy node of the client uses the running result of current endorsement in the transaction.

With reference to the foregoing possible implementation of the first aspect, in a second possible implementation of the first aspect, the endorsing, by the processing node, the smart contract to obtain a running result of current endorsement includes: receiving, by the processing node, a request that is sent by the client or the proxy node of the client for simulating running of the smart contract, where the request includes identification information of the smart contract; identifying, by the processing node, the restrictive condition in the smart contract based on the identification information of the smart contract; and running, by the processing node, the program other than the restrictive condition in the smart contract based on the local ledger data and signing, to obtain the running result of current endorsement.

Specifically, the processing node may identify the restrictive condition in the smart contract, and run the program other than the restrictive condition in the smart contract based on the local ledger data of the processing node and sign, to obtain the running result of current endorsement. It should be understood that the processing node may run all the programs of the smart contract, or may run only the program other than the restrictive condition in the smart contract. This is not limited in this embodiment of this application.

With reference to the foregoing possible implementation of the first aspect, in a third possible implementation of the first aspect, before the endorsing, by the processing node, the smart contract to obtain a running result of current endorsement, the method further includes: receiving, by the processing node, programs of the smart contract, sent by the client or the proxy node of the client; parsing, by the processing node, the programs of the smart contract to obtain a program of the restrictive condition; and sending, by the processing node, the program of the restrictive condition to the client or the proxy node of the client.

Specifically, when the processing node is an endorsement node, the client or the proxy node of the client may send the programs of the smart contract to the endorsement node. The endorsement node receives the programs of the smart contract, parses the programs of the smart contract, and sends the code of the restrictive condition in the smart contract to the client or the proxy node. The client or the proxy node receives the code of the restrictive condition, and sends the code of the restrictive condition in the smart contract to all processing nodes in the distributed network by using a transaction. It should be understood that recording a piece of code into all processing nodes by using a transaction belongs to the prior art, and therefore is not described in this specification.

With reference to the foregoing possible implementation of the first aspect, in a fourth possible implementation of the first aspect, the processing node is a proxy node, and before the receiving, by a processing node, a transaction sent by a consensus service node, the method further includes: sending, by the processing node, a request for simulating running of the smart contract to a plurality of endorsement nodes in the distributed network, where the request includes identification information of the smart contract; receiving, by the processing node, a running result that is sent by each of the plurality of endorsement nodes according to the request; checking, by the processing node, whether the plurality of received running results meet the verification policy, where the checking includes checking version numbers and data that are in the plurality of running results and that are generated by the program other than the restrictive condition; and when the plurality of running results meet the verification policy, sending, by the processing node, the plurality of running results to a client.

In an optional embodiment, the processing node may first determine whether a quantity of running results having a valid signature in the plurality of running results exceeds a preset value (in other words, verify validity of the running results), and then determine, in the running results succeeding in the validity verification, whether a quantity of running results including same data and same version numbers exceeds a preset value (in other words, verify consistency of the remaining running results).

In another optional embodiment, once receiving a running result, the processing node may detect whether a signature of the running result is valid. If the signature of the running result is valid, the processing node records data and a version number in the running result. If it is verified that the signature is invalid, the processing node does not record the data or the version number. When a quantity of running results including same data and a same version number in running results that are received by the processing node and that have a valid signature exceeds a preset value, the processing node determines that the running results meet the verification policy.

With reference to the foregoing possible implementation of the first aspect, in a fifth possible implementation of the first aspect, before the sending, by the processing node, a request for simulating running of the smart contract to a plurality of endorsement nodes in the distributed network, the method further includes: sending, by the processing node, programs of the smart contract to the plurality of endorsement nodes; receiving, by the processing node, a program that is of the restrictive condition and that is sent by the plurality of endorsement nodes based on the programs of the smart contract; and sending, by the processing node, the program of the restrictive condition to all processing nodes in the distributed network.

It should be understood that the restrictive condition in the smart contract is obtained through parsing in advance by the endorsement nodes based on code of the smart contract, the endorsement nodes send the code of the restrictive condition to the client or the proxy node, and then the proxy node or the client records the code of the restrictive condition into all the processing nodes in the distributed network by using a transaction.

According to a second aspect, another method for running a smart contract is provided, including: sending, by a client, a request for simulating running of a smart contract to a plurality of endorsement nodes in a distributed network, where the request includes identification information of the smart contract; receiving, by the client, a running result that is sent by each of the plurality of endorsement nodes according to the request; checking, by the client, whether the plurality of received running results meet a verification policy, where the checking includes checking version numbers and data that are in the plurality of running results and that are generated by a program other than a restrictive condition in the smart contract, and the restrictive condition indicates a condition to be met by ledger data in the distributed network when the smart contract is run; and when the plurality of running results meet the verification policy, sending, by the client, a transaction including the plurality of running results to a consensus service node.

With reference to the second aspect, in a first possible implementation of the second aspect, before the sending, by a client, a request for simulating running of a smart contract to a plurality of endorsement nodes in a distributed network, the method further includes: sending, by the client, programs of the smart contract to the plurality of endorsement nodes; receiving, by the client, a program that is of the restrictive condition and that is sent by the plurality of endorsement nodes based on the program of the smart contract; and sending, by the client, the program of the restrictive condition to all processing nodes in the distributed network.

According to a third aspect, an apparatus for running a smart contract is provided, and the apparatus is configured to perform the method in the first aspect or any possible implementation of the first aspect. Specifically, the apparatus includes a unit configured to perform the method in the first aspect or any possible implementation of the first aspect.

According to a fourth aspect, another apparatus for running a smart contract is provided, and the apparatus is configured to perform the method in the second aspect or any possible implementation of the second aspect. Specifically, the apparatus includes a unit configured to perform the method in the second aspect or any possible implementation of the second aspect.

According to a fifth aspect, an apparatus for running a smart contract is provided. The apparatus includes a transceiver, a memory, and a processor. The transceiver, the memory, and the processor communicate with each other through an internal connection chain. The memory is configured to store an instruction. The processor is configured to execute the instruction stored in the memory, to control a receiver to receive a signal, and control a transmitter to send a signal. In addition, when the processor executes the instruction stored in the memory, the processor performs the method in the first aspect or any possible implementation of the first aspect.

According to a sixth aspect, an apparatus for running a smart contract is provided. The apparatus includes a transceiver, a memory, and a processor. The transceiver, the memory, and the processor communicate with each other through an internal connection chain. The memory is configured to store an instruction. The processor is configured to execute the instruction stored in the memory, to control a receiver to receive a signal, and control a transmitter to send a signal. In addition, when the processor executes the instruction stored in the memory, the processor performs the method in the second aspect or any possible implementation of the second aspect.

According to a seventh aspect, a computer-readable medium is provided, and the computer-readable medium is configured to store a computer program. The computer program includes an instruction used to perform the method in the first aspect or any possible implementation of the first aspect.

According to an eighth aspect, a computer-readable medium is provided, and the computer-readable medium is configured to store a computer program. The computer program includes an instruction used to perform the method in the second aspect or any possible implementation of the second aspect.

### BRIEF DESCRIPTION OF DRAWINGS

FIG. 1 is a schematic diagram of a network architecture according to an embodiment of this application;
FIG. 2A and FIG. 2B are a schematic flowchart of a method for running a smart contract according to an embodiment of this application;
FIG. 3A and FIG. 3B are a schematic flowchart of another method for running a smart contract according to an embodiment of this application;
FIG. 4 is a schematic flowchart of another method for running a smart contract according to an embodiment of this application;
FIG. 5 is a schematic block diagram of an apparatus for running a smart contract according to an embodiment of this application;
FIG. 6 is a schematic block diagram of another apparatus for running a smart contract according to an embodiment of this application;
FIG. 7 is a schematic block diagram of another apparatus for running a smart contract according to an embodiment of this application; and
FIG. 8 is a schematic block diagram of another apparatus for running a smart contract according to an embodiment of this application.

### DESCRIPTION OF EMBODIMENTS

The following describes technical solutions in embodiments of this application with reference to accompanying drawings in the embodiments of this application.

A blockchain technology and a smart contract in the embodiments of this application are described first.

Blockchain technology: First, a blockchain is a distributed system in which a unanimous direct payment can be achieved between both parties based on a cryptography principle without participation of a third-party intermediary. Also, the blockchain is a distributed ledger and a decentralized database, and is maintained by all processing nodes in a blockchain network together. The blockchain includes a plurality of blocks . Each block includes several transaction records, and includes a hash value of a previous block. In this way, all the blocks are connected in sequence to constitute the blockchain.

Smart contract: The smart contract is an event-driven and stateful program that is run on a replicated and shared ledger and that can manage data in the ledger. The smart contract looks like a normal computer executable program. Code content of the smart contract specifies a transaction rule and transaction logic. When a user signs and invokes the smart contract, it means that the content of the contract is to be executed, and an execution result is to be written to the ledger.

For example, an asset transaction is implemented by using a blockchain and a smart contract. Possible smart contract pseudo code is as follows:

```
Func BuyOneAsset()
          {
              OwnerID=***//obtain an ID of a smart contract owner
         BuyerID=stub.GetInvokerID()//obtain an ID of a smart contract invoker
         (buyer)
              Buyer_Money=stub.Get("BuyerID", "Money")//obtain a money
              balance of the buyer
             Asset_Account=stub.Get("OwnerID", "Asset_account")//obtain a
             quantity of assets A of OwnerID
```

If (Asset_Account>1 && Buyer_Money>100)//each asset has value of 100, the quantity of assets of the owner and the balance of the buyer are checked, and the following asset transfer can be performed only when the owner has a sufficient quantity of assets and the buyer has sufficient money

```
             {
          stub.Sub("OwnerID","Asset_account", 1)//asset transfer
                 stub.Add("BuyerID","Asset_account", 1)//asset transfer
                 stub.Sub("BuyerID", "Money", 100)//money transfer
                 stub.Add("OwnerID", "Money", 100)//money transfer
                 return SUCCESS
             }
         else
          {
                 Return FAILURE
             }
          }
```

If a user wants to buy an asset, the user initiates, by using a client, a transaction of invoking the BuyOneAsset function of the smart contract. The smart contract reads a money balance of the buyer and a quantity of remaining assets of the owner from data stored in the blockchain. After it is determined that a transaction condition is met, the transaction is performed, and the money balance of the buyer and the quantity of remaining assets of the owner are modified. After the transaction is written to a ledger through consensus, the user succeeds in the transaction of buying the asset.

A consensus algorithm is usually used to ensure that a network meets different levels of consistency. The following describes a consensus algorithm in the embodiments of this application.

The consensus algorithm is used in a process in which a plurality of nodes reach a consensus on a proposal. Because the blockchain is a decentralized and trustless distributed ledger, processing nodes in the blockchain network do not trust each other, and there may be a malicious lying node. The consensus algorithm can be used to resolve this problem well. Each processing node in the blockchain network may be a malicious lying node, but when many processing nodes are clustered into one network, a result obtained through consensus among the nodes is a credible result. A main function of the consensus algorithm is to enable all the processing nodes in the blockchain network to record same content of a valid transaction block. Common consensus algorithms include a practical byzantine fault tolerance (practical byzantine fault tolerance, PBFT) algorithm, a proof of work (proof of work, PoW) algorithm, a proof of endorsement (proof of endorsement, PoE) algorithm, and the like.

In the PoE algorithm, when a client needs to run a smart contract, the client may first send a request for simulating running of the smart contract to a plurality of endorsement nodes, to simulate running of the smart contract. The plurality of endorsement nodes run the smart contract, sign running results of the endorsement nodes, and then return the running results to the client (which is referred to as "endorsement" in this specification). Then the client encapsulates the plurality of running results of the plurality of endorsement nodes into a transaction message in a blockchain message format, and sends the transaction message to a consensus service node, to broadcast the transaction message to all the processing nodes (including the plurality of endorsement nodes) in the blockchain network by block by using the consensus service node. The processing nodes in the blockchain network check a received transaction, and when the transaction meets a verification policy, consider the transaction as a valid transaction, and then modify data and write updated data to the blockchain. Herein, a user may set, based on an actual requirement of the user by using the client, a plurality of endorsement nodes to be trusted by the smart contract, and set a verification policy for the plurality of endorsement nodes. For example, a user A may have three endorsement nodes, a client A of the user A sends a request for simulating running of a smart contract to the three endorsement nodes, and receives three corresponding running results, and a verification policy may be that content of the three running results needs to be consistent, or may be that content of at least two running results needs to be consistent. It should be understood that the verification policy of the user have been broadcast to all the processing nodes in the blockchain network in advance.

In an actual running process, the entire blockchain network is distributed, and each processing node in the blockchain network stores a piece of complete ledger data of the blockchain. However, because data is synchronized in sequence, blockchain data that is accessed by an endorsement node when the endorsement node runs a smart contract of a transaction is very likely to be inconsistent with data existing when the transaction subsequently is to be written by each processing node in the blockchain network to a local ledger, leading to invalid endorsement of the endorsement node. Therefore, some mechanisms are required to avoid writing the transaction suffering invalid endorsement to the ledger.

In the prior art, a self-increasing version number is set for each piece of data of a smart contract, and every time the data is updated, the version number is modified once (for example, the version number is increased by 1). During running of the smart contract, if an endorsement node needs to access data that is stored in the blockchain for the smart contract, the endorsement node records a version number of the data that needs to be accessed. A running result returned by the endorsement node to a client includes the version number of the data. A transaction message broadcast by the client by using the consensus service node also includes a version number of corresponding data. During transaction checking, all the processing nodes in the blockchain network check whether the version number of the data in a transaction is consistent with version numbers of local ledger data, and when the version numbers are consistent, determine the transaction as a valid transaction, and update the local ledger data.

However, when data of the blockchain is changed relatively frequently, for a transaction, a version number of data that is accessed by an endorsement node in a local ledger when the endorsement node runs a smart contract is very likely to be inconsistent with version numbers of data of all the processing nodes in the blockchain network that exist when the transaction is broadcast, by using the consensus service node, to the processing nodes for verification, causing the transaction to be invalid. In this case, a client needs to re-initiate the transaction, until version numbers of data are consistent and the transaction is valid and is written to a ledger. In view of this, the embodiments of this application provide a new method for running a smart contract.

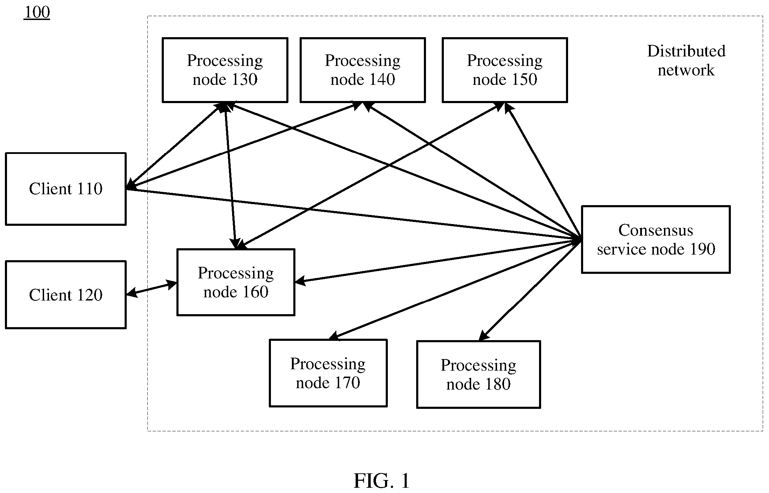

FIG. 1 shows a network architecture 100 according to an embodiment of this application. As shown in FIG. 1, the network architecture 100 includes a client and a network side. The network side is a distributed network. The distributed network is a peer-to-peer (peer-to-peer, p2p) network including a plurality of nodes. The network is formed through interconnection by nodes that are distributed at different places and that have a plurality of terminals. Any node in the network is connected to at least two links. When any link is faulty, communication may be completed over another link. Reliability is relatively high, and it is easy to expand. The client may communicate with the network side by using nodes in the distributed network, to meet a corresponding service requirement.

During communication between the client and the network side, different roles may be assigned to different nodes based on functions of the nodes. The following first describes the client and network side nodes in this embodiment of this application.
(1) Client: The client may send a request for simulating running of a smart contract to endorsement nodes of a user based on a requirement of the user, receive running results sent by the endorsement nodes, and perform verification on the running results.
(2) Processing node: The processing node is a basic node in the distributed network, stores a piece of complete ledger data of a blockchain, and manages the locally stored ledger data. It should be understood that a piece of ledger data usually needs to be maintained by a plurality of processing nodes together. Specifically, the processing node may receive a transaction set broadcast by a consensus service node, verify validity of a transaction, and if the transaction is valid, modify the local ledger data.
(3) Proxy node: The proxy node is a processing node having a proxy function. The proxy node may represent a client to send a request for simulating running of a smart contract to endorsement nodes, represent the client to receive running results sent by the endorsement nodes and perform verification on the running results, and when running results are verified, send the running results meeting a verification policy to the client.
(4) Endorsement node: The endorsement node is a processing node having an endorsement function. Endorsement nodes are generally some nodes run by credible institutions (for example, a government, a bank, and a large company). The endorsement node may receive a request that is sent by a client or a proxy node for simulating running of a smart contract, run the smart contract, "endorse" a running result of the smart contract, and then return the running result of the smart contract to the client or the proxy node. It should be understood that the "endorse" means that the endorsement node signs its own content of the running result, of the smart contract, to ensure validity of the running result.
(5) Consensus service node: The consensus service node is configured to provide a consensus service for a block, and main functions of the consensus service node are to receive a transaction sent by a client or a proxy node, determine, according to a specific rule, a transaction set that needs to be included in a block (but does not verify validity of a transaction), determine a sequence of a plurality of transactions in the transaction set, and then broadcast the transaction set to all the nodes (including endorsement nodes) in the distributed network. It should be understood that the consensus service node may be one node, or may be a cluster including a plurality of nodes.

FIG. 1 shows, for example, two clients and nodes in the distributed network, including a client 110, a client 120, a processing node 130 to a processing node 180, and a consensus service node 190. In an optional embodiment, the distributed network may be a blockchain network, but this is not limited in this embodiment of this application.

The following provides a description by using an example in which the processing node 130, the processing node 140, and the processing node 150 are endorsement nodes, and the processing node 160 is a proxy node of the client 120.

It should be understood that a user may preset nodes as endorsement nodes of the user by using a client. For example, endorsement nodes of the client 110 are the processing node 130 and the processing node 140, and endorsement nodes of the client 120 are the processing node 130 and the processing node 150. This is not limited in this embodiment of this application. A client may have a proxy node, or may not have a proxy node. For example, in the network architecture 100, the processing node 160 is a proxy node of the client 120, while the client 110 does not have a proxy node. This is not limited in this embodiment of this application either.

It should be further understood that FIG. 1 shows two clients and some processing nodes as examples. Optionally, the network architecture 100 may include another quantity of clients and another quantity of processing nodes. This is not limited in this embodiment of this application.

Programs of the processing nodes in the network architecture 100 are basically the same, and the processing nodes are classified into different types of nodes because of different roles during running. The processing nodes in the network architecture 100 may enable or disable corresponding modules for different roles. This is not limited in this embodiment of this application.

During running of a smart contract, a client may first send a request for simulating running of the smart contract to a plurality of endorsement nodes, to simulate running of the smart contract. The plurality of endorsement nodes run the smart contract, endorse their own running results, and then return the running results to the client. Then the client encapsulates the plurality of running results of the plurality of endorsement nodes into a transaction message in a blockchain message format, and sends the transaction message to the consensus service node, to broadcast the transaction message to all the processing nodes in the distributed network by block by using the consensus service node. The processing nodes in the distributed network check a received transaction, and when the transaction meets a verification policy, consider the transaction as a valid transaction, and then modify data and write updated data to the blockchain.

As described above, when data of the blockchain is changed relatively frequently, for a transaction, a version number of data that is accessed by an endorsement node in a local ledger when the endorsement node runs a smart contract is very likely to be inconsistent with version numbers of data of all the processing nodes in the distributed network that exist when the transaction is broadcast, by using the consensus service node, to the processing nodes for verification, causing the transaction to be invalid. In this case, a client needs to re-initiate the transaction, until version numbers of data are consistent and the transaction is valid and is written to a ledger.

A part of common code logic (referred to as a restrictive condition in this specification) in a smart contract, reads data stored in the blockchain, and then condition determining are performed based on the data and the part of code logic in the smart contract. The data is usually a precondition for determining that the smart contract can be normally executed. If the data is changed relatively frequently, invalid transactions or retries often occur. Therefore, a main idea of this application is to provide a mechanism for relatively frequently modified data (namely, data corresponding to a restrictive condition) in a blockchain, so that a plurality of endorsement nodes ignore this part of data when running a smart contract, and a plurality of running results are easier to be consistent. In addition, before a processing node in a network performs verification on a transaction and finally writes the transaction to a ledger, the processing node checks this part of data based on local ledger data of the processing node. If a transaction success condition is met, the processing node can still accept a modification made by the transaction to data. In other words, determining logic of the restrictive condition is executed later, to increase a success rate of writing a transaction when data is changed relatively frequently, and improve overall system performance.

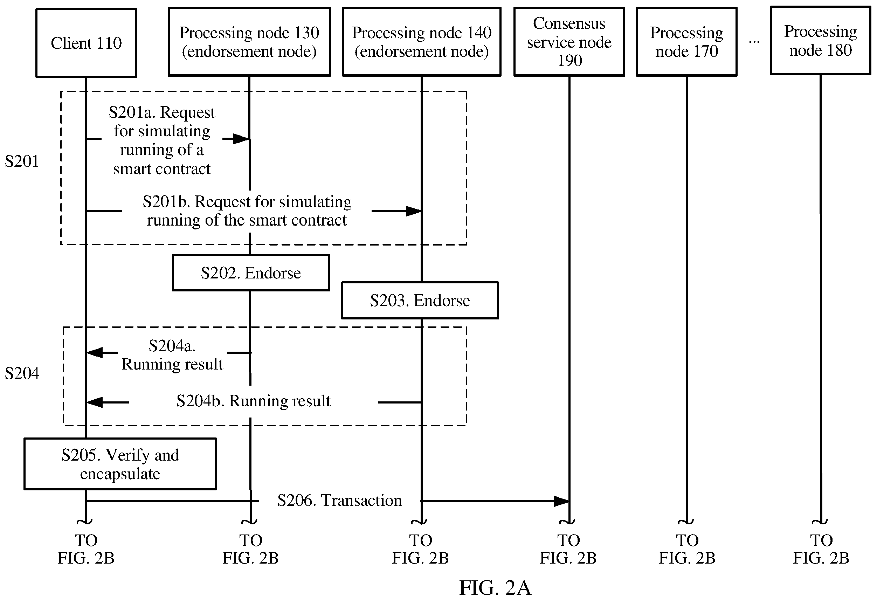

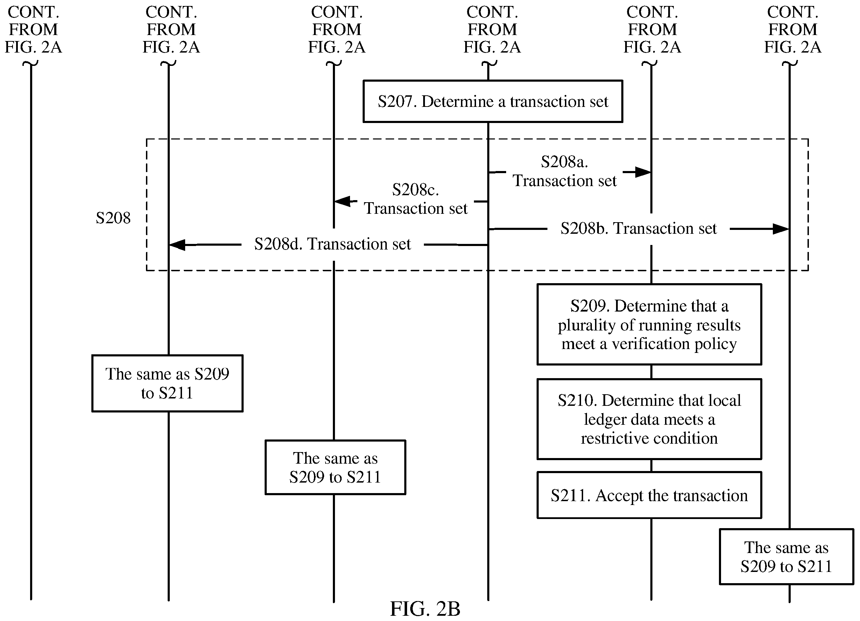

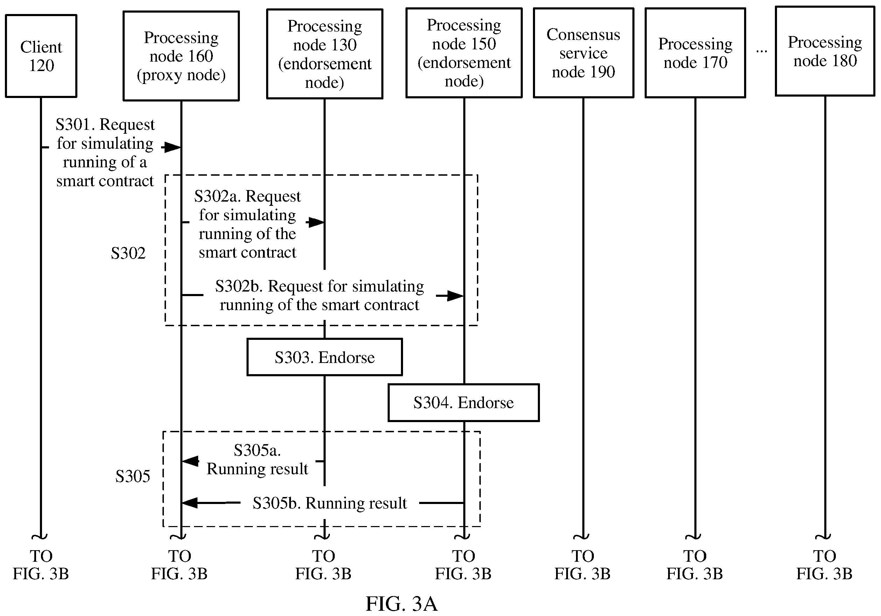

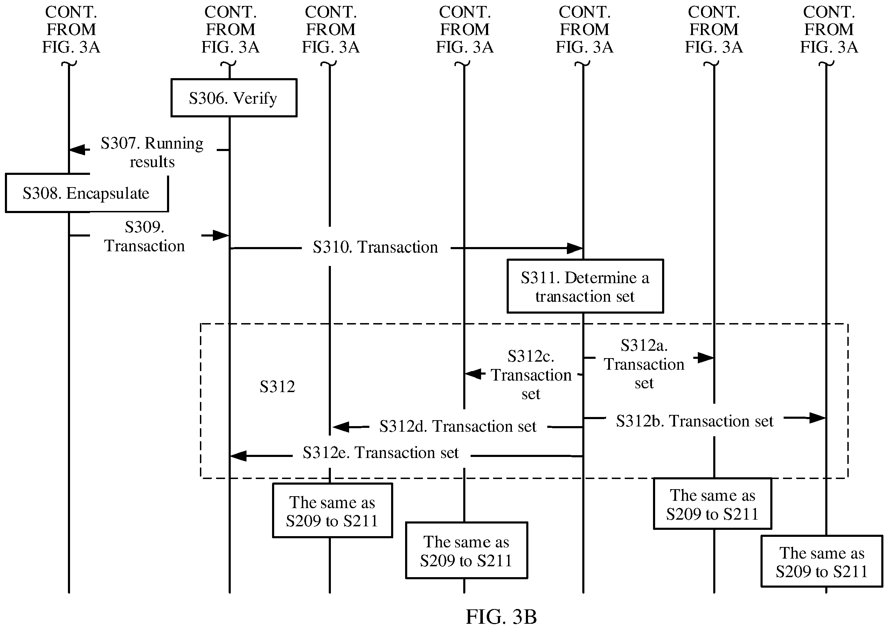

The following describes in detail embodiments of this application with reference to FIG. 2A and FIG. 2B and FIG. 3A and FIG. 3B.

FIG. 2A and FIG. 2B are a schematic flowchart of a method 200 for running a smart contract according to an embodiment of this application. The method 200 may be applied to the network architecture 100 shown in FIG. 1, but this embodiment of this application is not limited thereto. It should be understood that smart contract running usually includes an endorsement stage and a transaction stage.

Specifically, S201 to S204 are the endorsement stage, including:
S201. The client 110 separately sends a request for simulating running of the smart contract to a plurality of processing nodes (endorsement nodes). The request includes identification information of the smart contract. Correspondingly, each of the plurality of processing nodes (endorsement nodes) receives the request.

Specifically, a description is provided by using an example in which the client 110 has only two endorsement nodes (the processing node 130 and the processing node 140). In this case, as shown in FIG. 2A and FIG. 2B, S201 may include S201a and S201b. S201a and S201b may be performed separately, or may be performed at the same time. This is not limited in this embodiment of this application.

S202. The processing node 130 runs the smart contract according to the request and endorses a running result, to obtain a running result of current endorsement.

Specifically, the processing node 130 may identify a restrictive condition in the smart contract, and run a program other than the restrictive condition in the smart contract based on local ledger data of the processing node 130 and sign, to obtain the running result of current endorsement. It should be understood that the processing node 130 may run all programs of the smart contract, or may run only the program other than the restrictive condition in the smart contract. This is not limited in this embodiment of this application.

S203. The processing node 140 runs the smart contract according to the request and endorses a running result, to obtain a running result of current endorsement.

Specifically, the processing node 140 may identify the restrictive condition in the smart contract, and run the program other than the restrictive condition in the smart contract based on local ledger data of the processing node 140 and sign, to obtain the running result of current endorsement. It should be understood that the processing node 140 may run all the programs of the smart contract, or may run only the program other than the restrictive condition in the smart contract. This is not limited in this embodiment of this application.

S204. The plurality of processing nodes (including the processing node 130 and the processing node 140) send a plurality of running results of current endorsement to the client 110. Correspondingly, the client 110 receives the running results of current endorsement that are sent by the plurality of processing nodes.

Specifically, as shown in FIG. 2A and FIG. 2B, S204 may include S204a and S204b. Because endorsement nodes have different smart contract processing speeds, S204a and S204b may be performed in any sequence. This is not limited in this embodiment of this application.

S205 to S211 are the transaction stage, including:
S205. The client 110 determines whether the plurality of running results meet a verification policy, and encapsulates running results meeting the verification policy into a transaction.

Because the client 110 receives the plurality of running results in sequence, and the verification policy usually includes validity verification and consistency verification, the client 110 may perform verification on the plurality of running results in a plurality of verification manners.

In an optional embodiment, the client 110 may first determine whether a quantity of running results having a valid signature in the plurality of running results exceeds a preset value (in other words, verify validity of the running results), and then determine, in running results succeeding in the validity verification, whether a quantity of running results including same data and a same version number exceeds a preset value (in other words, verify consistency of the remaining running results).

In another optional embodiment, once receiving a running result, the client 110 may detect whether a signature of the running result is valid. If the signature of the running result is valid, the client 110 records data and a version number in the running result. If it is verified that the signature is invalid, the client 110 does not record the data or the version number. When a quantity of running results including same data and a same version number in running results that are received by the client 110 and that have a valid signature exceeds a preset value, the client 110 determines that the running results meet the verification policy.

S206. The client 110 sends the transaction to the consensus service node 190. Correspondingly, the consensus service node 190 receives the transaction.

S207. The consensus service node 190 sequentially packages, into a transaction set according to a specific rule, a plurality of transactions including the transaction that are accumulated within a period of time.

S208. The consensus service node 190 broadcasts the transaction set to all processing nodes in a distributed network.

It should be understood that FIG. 2A and FIG. 2B show only some processing nodes, but this should not constitute any limitation on this embodiment of this application. In FIG. 2A and FIG. 2B, S208 may include S208a, S208b, S208c, and S208d. Correspondingly, the processing node 130 receives the transaction set, the processing node 140 receives the transaction set, the processing node 170 receives the transaction set, and the processing node 180 receives the transaction set.

For ease of understanding and description, in this embodiment of this application, the processing node 170 in the distributed network is used as an example. It should be understood that transaction processing steps of a processing node other than the processing node 170 in all the processing nodes are the same as the following transaction processing steps of the processing node 170. Details are not described herein again.

S209. The processing node 170 checks whether the plurality of running results in the transaction meet the verification policy. The checking herein is checking version numbers and data that are in the plurality of running results and that are generated by a program other than a restrictive condition in the smart contract, and the restrictive condition indicates a condition to be met by ledger data in the distributed network when the smart contract is run.

Specifically, code of the restrictive condition is usually code of a certain condition, in the smart contract, to be met by relatively frequently modified data, and for the plurality of running results received by the processing node 170, two cases may occur:
(1) The plurality of running results are results generated by running all the programs of the smart contract. In other words, the plurality of running results each include data and a version number that are generated by running a program of the restrictive condition in the smart contract. In this case, the processing node 170 may ignore version numbers and data that are in the plurality of running results and that are related to the restrictive condition, and check the version numbers and the data that are generated by the program other than the restrictive condition.
(2) The plurality of running results are version numbers and data that are generated by running the program other than the restrictive condition. In this case, the processing node 170 may directly check the plurality of running results.

Therefore, regardless of whether the plurality of running results include the version numbers and the data that are generated by running the program of the restrictive condition, during checking, the processing node 170 only needs to check the version numbers and the data that are generated by the program other than the restrictive condition.

It should be understood that a user may set, based on an actual requirement of the user by using the client, a plurality of endorsement nodes to be trusted by the smart contract, and set a verification policy for the plurality of endorsement nodes. The verification policy may include consistency verification on a plurality of running results. For the consistency verification, when a quantity of running results including same data and a same version number meets a preset value, it may be considered that the plurality of running results succeed in the consistency verification. For example, three endorsement nodes are preset by using the client, and a corresponding verification policy may be that data and version numbers in three running results need to be consistent, or may be that data and version numbers in at least two running results need to be consistent. This is not limited in this embodiment of this application.

Optionally, because the plurality of running results are generated after the endorsement nodes sign, the verification may further include validity verification on the plurality of running results. For the validity verification, when a quantity of running results having a valid signature in the plurality of running results meets a preset value, it may be considered that the plurality of running results succeed in the validity verification, but this is not limited in this embodiment of this application. In addition, the processing node 170 usually first performs validity verification on the plurality of running results, and then performs consistency verification on remaining running results having a valid signature, but this is not limited in this embodiment of this application.

S210. When the plurality of running results meet the verification policy, the processing node 170 identifies the restrictive condition in the smart contract, and determines whether local ledger data meets the restrictive condition.

Specifically, when the plurality of running results meet the verification policy (in other words, succeed in the validity verification and the consistency verification), the processing node 170 may determine the restrictive condition in the smart contract, and then determine whether the local ledger data meets the restrictive condition. It should be understood that if the plurality of running results do not meet the verification policy, the processing node 170 may directly consider the transaction as an invalid transaction, and reject a modification to the local ledger data.

It should be understood that the restrictive condition in the smart contract is obtained through parsing in advance by the endorsement nodes based on code of the smart contract, the endorsement nodes send the code of the restrictive condition to the client or a proxy node, and then the proxy node or the client records the code of the restrictive condition into all the nodes in the distributed network by using a transaction. Therefore, the processing node 170 can identify the restrictive condition in the smart contract.

S211. When the local ledger data of the processing node 170 meets the restrictive condition, the processing node 170 accepts the transaction.

Specifically, when the local ledger data meets the restrictive condition, the processing node 170 may consider the transaction as a valid transaction. Further, the processing node 170 may modify the local ledger data of the processing node 170 based on the plurality of running results. It should be understood that, if the local ledger data of the processing node 170 does not meet the restrictive condition, the processing node 170 may determine the transaction as an invalid transaction, and reject a modification to the local ledger data.

It should be understood that the processing node 170 receives the transaction set, and performs sequential processing based on a sequence of the plurality of transactions. Because a processing manner for each of the plurality of transactions is the same as the transaction processing manner in S209 to S211, details are not described herein again.

In an optional embodiment, before S201, the method further includes: sending, by the client 110, programs of the smart contract to the plurality of endorsement nodes (namely, the processing node 130 and the processing node 140); receiving, by the plurality of endorsement nodes, the programs of the smart contract, parsing the programs of the smart contract, and sending the code of the restrictive condition in the smart contract to the client 110; and receiving, by the client 110, the code of the restrictive condition, and sending the code of the restrictive condition in the smart contract to all the processing nodes in the distributed network by using a transaction. It should be understood that recording a piece of code into all processing nodes by using a transaction belongs to the prior art, and therefore is not described in this specification.

In this embodiment of this application, when performing verification on the plurality of running results of the transaction according to the verification policy, all the processing nodes in the distributed network first ignore verification that is based on the restrictive condition corresponding to relatively frequently changed data. After the version numbers and the data that are in the plurality of running results and that are unrelated to the restrictive condition meet the verification policy, the processing nodes verify whether local ledger data meets the restrictive condition, and when the local ledger data meets the restrictive condition, accept the transaction. When data of the distributed network is changed relatively frequently, for a transaction, a version number of data that is accessed by an endorsement node in a local ledger when the endorsement node runs a smart contract is very likely to be inconsistent with version numbers of data of all the processing nodes in the distributed network that exist when the transaction is broadcast, by using the consensus service node, to the nodes for verification. In this case, a client needs to re-initiate the transaction. However, in the manner of this embodiment of this application, continual retries of the client caused by relatively frequently modified data are avoided.

According to the method for running a smart contract in this embodiment of this application, verification that is based on the restrictive condition corresponding to the relatively frequently changed data is performed later. After the version numbers and the data that are in the plurality of running results of the transaction and that are unrelated to the restrictive condition meet the verification policy, it is verified whether the local ledger data meets the restrictive condition. This increases a success rate of writing a transaction to a ledger, and improves overall system performance.

It should be understood that sequence numbers of the foregoing processes do not mean particular execution sequences. The execution sequences of the processes should be determined based on functions and internal logic of the processes, and should not be construed as any limitation on the implementation processes of this embodiment of this application.

For ease of understanding and description, without loss of generality, the following provides a description by using an example in which the client 120 has a proxy node (namely, the processing node 160).

FIG. 3A and FIG. 3B are a schematic flowchart of another method 300 for running a smart contract according to an embodiment of this application. The method 300 may be applied to the network architecture 100 shown in FIG. 1, but this embodiment of this application is not limited thereto.

S301. The client 120 sends a request for simulating running of the smart contract to the processing node 160. The request includes identification information of the smart contract. Correspondingly, the processing node 160 receives the request.

S302. The processing node 160 separately sends the request for simulating running of the smart contract to a plurality of processing nodes (endorsement nodes). Correspondingly, each of the plurality of processing nodes (endorsement nodes) receives the request.

Specifically, a description is provided by using an example in which the client 120 has two endorsement nodes (the processing node 130 and the processing node 150). In this case, as shown in FIG. 3A and FIG. 3B, S302 may include S302a and S302b. S302a and S302b may be performed seperately, or may be performed at the same time. This is not limited in this embodiment of this application.

S303. The processing node 130 runs the smart contract according to the request and endorses a running result, to obtain a running result of current endorsement.

Specifically, the processing node 130 may identify a restrictive condition in the smart contract, and run a program other than the restrictive condition in the smart contract based on local ledger data of the processing node 130 and sign, to obtain the running result of current endorsement. It should be understood that the processing node 130 may run all programs of the smart contract, or may run only the program other than the restrictive condition in the smart contract. This is not limited in this embodiment of this application.

S304. The processing node 150 runs the smart contract according to the request and endorses a running result, to obtain a running result of current endorsement.

Specifically, the processing node 150 may identify the restrictive condition in the smart contract, and run the program other than the restrictive condition in the smart contract based on local ledger data of the processing node 150 and sign, to obtain the running result of current endorsement. It should be understood that the processing node 150 may run all the programs of the smart contract, or may run only the program other than the restrictive condition in the smart contract. This is not limited in this embodiment of this application.

S305. The plurality of processing nodes (including the processing node 130 and the processing node 150) separately send running results of current endorsement to the processing node 160. Correspondingly, the processing node 160 receives the plurality of running results.

Specifically, as shown in FIG. 3A and FIG. 3B, S305 may include S305a and S305b. Because endorsement nodes have different smart contract processing speeds, S305a and S305b may be performed in any sequence. This is not limited in this embodiment of this application.

S306. The processing node 160 performs verification on the plurality of received running results, to determine whether the plurality of running results meet a verification policy.

Because the processing node 160 receives the plurality of running results in sequence, and the verification policy usually includes validity verification and consistency verification, the processing node 160 may perform verification on the plurality of running results in a plurality of verification manners.

In an optional embodiment, the processing node 160 may first determine whether a quantity of running results having a valid signature in the plurality of running results exceeds a preset value (in other words, verify validity of the running results), and then determine, in running results succeeding in the validity verification, whether a quantity of running results including same data and a same version number exceeds a preset value (in other words, verify consistency of the remaining running results).

In another optional embodiment, once receiving a running result, the processing node 160 may detect whether a signature of the running result is valid. If the signature of the running result is valid, the processing node 160 records data and a version number in the running result. If it is verified that the signature is invalid, the processing node 160 does not record the data or the version number. When a quantity of running results including same data and a same version number in running results that are received by the processing node 160 and that have a valid signature exceeds a preset value, the processing node 160 determines that the running results meet the verification policy.

S307. When running results meet the verification policy, the processing node 160 sends the running results meeting the verification policy to the client 120. Correspondingly, the client 120 receives the running results meeting the verification policy.

S308. The client 120 encapsulates the running results meeting the verification policy into a transaction (for example, a transaction A).

S309. The client 120 sends the transaction to the processing node 160. Correspondingly, the processing node 160 receives the transaction.

S310. The processing node 160 sends the transaction to the consensus service node 190. Correspondingly, the consensus service node 190 receives the transaction.

S311. The consensus service node 190 sequentially packages, into a transaction set according to a specific rule, a plurality of transactions including the transaction A that are accumulated within a period of time.

S312. The consensus service node 190 broadcasts the transaction set to all processing nodes in a distributed network.

It should be understood that FIG. 3A and FIG. 3B show only some processing nodes, but this should not constitute any limitation on this embodiment of this application. In FIG. 3A and FIG. 3B, S312 may include S312a, S312b, S312c, S312d, and S312e. Correspondingly, the processing node 160 receives the transaction set, the processing node 130 receives the transaction set, the processing node 150 receives the transaction set, the processing node 170 receives the transaction set, and the processing node 180 receives the transaction set.

Next, each of the processing nodes sequentially processes the plurality of transactions in the transaction set. A processing procedure is the same as S209 to S211, and details are not described herein again.

It should be understood that sequence numbers of the foregoing processes do not mean particular execution sequences. The execution sequences of the processes should be determined based on functions and internal logic of the processes, and should not be construed as any limitation on the implementation processes of this embodiment of this application.

According to the method for running a smart contract in this embodiment of this application, verification that is based on the restrictive condition corresponding to relatively frequently changed data is performed later. After the version numbers and the data that are in the plurality of running results of the transaction and that are unrelated to the restrictive condition meet the verification policy, it is verified whether the local ledger data meets the restrictive condition. This increases a success rate of writing a transaction to a ledger, and improves overall system performance.

In an optional embodiment, before S301, the method further includes: sending, by the client 120, programs of the smart contract to the proxy node (namely, the processing node 160) of the client 120; receiving, by the proxy node, the programs of the smart contract, and sending the programs of the smart contract to the plurality of endorsement nodes (namely, the processing node 130 and the processing node 150); receiving, by the plurality of endorsement nodes, the programs of the smart contract, parsing the programs of the smart contract, and sending code of the restrictive condition in the smart contract to the proxy node; receiving, by the proxy node, the code of the restrictive condition, and returning the code of the restrictive condition to the client 120; and receiving, by the client 120, the code of the restrictive condition, and then sending the code of the restrictive condition in the smart contract to all the processing nodes in the distributed network by using a transaction. It should be understood that recording a piece of code into all nodes by using a transaction belongs to the prior art, and therefore is not described in this specification.

According to the method for running a smart contract in this embodiment of this application, verification that is based on the restrictive condition corresponding to the relatively frequently changed data is performed later. After the version numbers and the data that are in the plurality of running results of the transaction and that are unrelated to the restrictive condition meet the verification policy, it is verified whether the local ledger data meets the restrictive condition. This increases a success rate of writing a transaction to a ledger, and improves overall system performance.

It should be understood that, in a possible implementation, the method for running a smart contract in this embodiment of this application may be specifically applied to a blockchain network, but this is not limited in this embodiment of this application.

The following describes the method for running a smart contract in this embodiment of this application by using a smart contract of an on-sale product as an example. The smart contract of the on-sale product includes a restrictive condition interface StateCondition. Condition determining for data stored in a blockchain is input to StateCondition. In this example, StateCondition is used to check whether a money balance of a buyer is sufficient to buy an asset, and check whether a quantity of remaining assets of an owner is sufficient for sale. Only when the data in the blockchain meets the conditions, an asset buying process in the smart contract can be performed. If the conditions are not met, an asset buying operation cannot be performed.

Smart contract pseudo code in this embodiment of this application is as follows:

```
         Func BuyOneAsset()
          {
          OwnerID=***//obtain an ID of a smart contract owner
         BuyerID=stub.GetInvokerID()//obtain an ID of a smart contract invoker
         (buyer)
            If StateCondition (stub.Get("BuyerID", "Money")> 100 &&
            stub.Get("OwnerID", "Asset_account")> 1)
          {
              stub.Sub("OwnerID","Asset_account", 1)//asset transfer
              stub.Add(BuyerID","Asset_account", 1)//asset transfer
              stub.Sub(BuyerID, "Money", 100)//money transfer
              stub.Add("OwnerID", "Money", 100)//money transfer
              return SUCCESS
             }
         else
          {
              Return FAILURE
             }
          }
```

A manager or a smart contract provider sends a transaction of running the smart contract to a plurality of endorsement nodes by using a client. Each of the plurality of endorsement nodes parses code of the smart contract, to obtain an StateCondition function of the smart contract, namely, code (stub.Get("BuyerId", "Money")>100 && stub.Get("OwnerID", "Asset_account")>1) of the restrictive condition interface of the smart contract. Each of the plurality of endorsement nodes returns the code of the restrictive condition interface to the client. The client records the code of the smart contract and the code of the restrictive condition interface of the smart contract into all nodes in the blockchain network by using a transaction. It should be understood that recording a piece of code into all nodes by using a transaction belongs to the prior art, and therefore is not described in this specification.

When a user A is to invoke the BuyOneAsset function of the smart contract, the user A sends a request for simulating running of the smart contract to an endorsement node M and an endorsement node N by using a client A. The request includes an identifier ID of the smart contract that the user A requests to invoke and a name (BuyOneAsset) of the function that the user A requests to invoke. It should be understood that, if the function to be invoked by the user A is a parametric function, the request further includes a parameter of the parametric function.

Each of the endorsement node M and the endorsement node N receives the request that is sent by the client for simulating running of the smart contract, and performs the following steps:
obtaining the code of the smart contract from a blockchain ledger based on the ID of the smart contract, running the code of the smart contract while the code of the restrictive condition interface of the smart contract is ignored, and recording a value and a version number of data accessed when the code of the smart contract is executed. It should be understood that a final running result may be data and a version number other than a tolerant data set. The tolerant data set is data to be accessed when the code of the restrictive condition interface is run, and a version number. In this embodiment of this application, the tolerant data set is BuyerId_Money and Owner_asset_account.

Finally, the endorsement node M returns a running result M to the client of the user A, and the endorsement node N returns a running result N to the client of the user A.

After receiving the running results sent by both the endorsement nodes, the client encapsulates the plurality of received running results into a transaction in a blockchain message format, and sends the transaction to a consensus service node.

Optionally, the client may compare data and version numbers in the plurality of running results, to determine whether the plurality of running results meet a verification policy, and when the plurality of running results meet the verification policy, encapsulates the plurality of running results into a transaction, and sends the transaction to the consensus service node. In this embodiment of this application, the verification policy is set to that the running results returned by the endorsement node M and the endorsement node N are consistent, in other words, parameters in both the running results are the same.

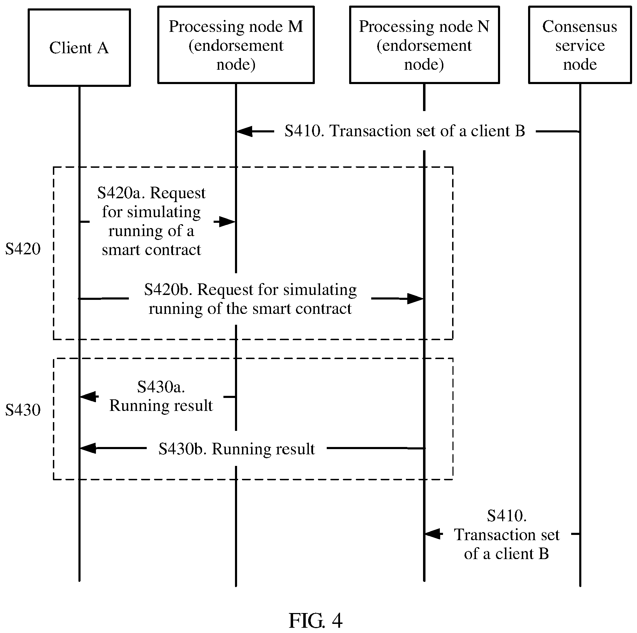

FIG. 4 is a schematic flowchart of another method for running a smart contract according to an embodiment of this application.

S410. A consensus service node broadcasts a transaction set of a client B to all nodes in a blockchain network.

Correspondingly, an endorsement node M receives the transaction set of the client B, and an endorsement node N receives the transaction set of the client B.

S420. A client A separately sends a request for simulating running of the smart contract to an endorsement node M and an endorsement node N. As shown in FIG. 4, S420 includes S420a and S420b. Correspondingly, the endorsement node M receives the request, and runs the smart contract based on the request and local ledger data, to obtain a running result of current endorsement, and the endorsement node N receives the request, and runs the smart contract based on the request and local ledger data, to obtain a running result of current endorsement.

S430. The endorsement node M and the endorsement node N separately send running results of current endorsement to the client A. Correspondingly, the client A receives the plurality of running results of current endorsement.

Because of a network latency, when the endorsement node M receives the transaction set of the client B, performs verification on data in the transaction set, and modifies the local ledger data, the endorsement node N has not received the transaction set of the client B. Therefore, the local ledger data used by the endorsement node M to run the smart contract of the client A is inconsistent with the local ledger data used by the endorsement node N to run the smart contract of the client A. Therefore, if the prior art is used, data version numbers of Owner_asset_account in ledgers of the endorsement node M and the endorsement node N are inconsistent. Specific ledger data is as follows:

**Table 1: Ledger of the endorsement node M**

| Readset | | | WriteSet | | |
|---|---|---|---|---|---|
| Key | Version | | Key | Delta | |
| | | | Owner_money | +100 | |
| Owner_asset_account | 100 | | Owner_asset_account | -1 | |
| UserA_money | 55 | | UserA_money | -100 | |
| | | | UserA_asset_account | +1 | |

**Table 2: Ledger of the endorsement node N**

| Readset | | | WriteSet | | |
|---|---|---|---|---|---|
| Key | Version | | Key | Delta | |
| | | | Owner_money | +100 | |
| Owner_asset_account | 101 | | Owner_asset_account | -1 | |
| UserA_money | 55 | | UserA_money | -100 | |
| | | | UserA_asset_account | +1 | |

Consequently, a transaction of a user A is invalid, and the client needs to re-initiate the transaction.

However, when the method for running a smart contract of this application is used, collected data and version numbers other than a tolerant data set (BuyerId_Money and Owner_asset_account) are as follows:

**Table 3: Ledger of the endorsement node M**

| Readset | | | WriteSet | | |
|---|---|---|---|---|---|
| Key | Version | | Key | Delta | |
| | | | Owner_money | +100 | |
| | | | Owner_asset_account | -1 | |
| | | | UserA_money | -100 | |
| | | | UserA_asset_account | +1 | |

**Table 4: Ledger of the endorsement node N**

| Readset | | | WriteSet | | |
|---|---|---|---|---|---|
| Key | Version | | Key | Delta | |
| | | | Owner_money | +100 | |
| | | | Owner_asset_account | -1 | |
| | | | UserA_money | -100 | |
| | | | UserA_asset_account | +1 | |

Because the ledger of the endorsement node M is the same as the ledger of the endorsement node N, a result is SUCCESS. The client determines that the running results of the endorsement node M and the endorsement node N meet a verification policy, encapsulates the running results into a transaction message, and sends the transaction message to the consensus service node.

The consensus service node collects transactions within a period of time to obtain a block. The block includes a transaction set formed in sequence. The consensus service node broadcasts the transaction set to all the nodes in the blockchain network. Each of the nodes sequentially processes the transactions in the transaction set one by one.

For ease of understanding and description, without loss of generality, herein, any processing node in the blockchain network is still used as an example. After receiving the broadcast transaction set, the processing node sequentially processes the transactions in the transaction set one by one. It is assumed that the transaction set includes three transactions Tx1, Tx2, and Tx3 that are separately sent by different users A, C, and D at a same moment, and all the transactions are asset buying transactions. Running results of the transactions are the same because the transactions are at the same moment. The transaction set sequentially includes the following transactions:

**Table 5: Transaction set**

| Block header (lash hash ...) | | |
|---|---|---|
| Tx1 | Invoke CCID BuyOneAsset | UserA signature |
| | endorsementM | |
| | endorsementN | |
| Tx2 | Invoke CCID BuyOneAsset | UserC signature |
| | endorsementM | |
| | endorsementN | |
| Tx3 | Invoke CCID BuyOneAsset | UserD signature |
| | endorsementM | |
| | endorsementN | |

### (1) Process Tx1

When processing Tx1, the processing node first determines whether running results M and N meet the verification policy, to be specific, whether endorsementM and endorsementN in Tx1 have a same running result and a same data modification. In this embodiment of this application, the running results M and N are shown in Table 3 and Table 4, and meet the verification policy.

Then the processing node checks whether a version number in local ledger data is consistent with data version numbers in Tx1 (to be specific, endorsementM and endorsementN in Tx1). After the checking, the version number in the local ledger data is consistent with the data version numbers in Tx1.

Finally, the processing node obtains code of a restrictive condition interface of the smart contract based on CCID. Specific code is: stub.Get("BuyerId", "Money")>100 && stub.Get("OwnerID", "Asset_account")>1. The processing node runs the code of the restrictive condition interface of the smart contract based on the local ledger data with a running result of SUCCESS, accepts a modification made by Tx1 to the data, and increases a version number of modified data by 1. Related data and version numbers are changed to the following:

**Table 6: Ledger data after Tx1 is accepted**

| Key | Version | Value |
|---|---|---|
| Owner_money | 102 | 4400 |
| Owner_asset_account | 102 | 1 |
| UserA_money | 56 | 500 |
| UserA_asset_account | 2 | 1 |
| UserC_money | 30 | 900 |
| UserC_asset_account | 1 | 0 |

### (2) Process Tx2

The processing node first determines whether running results M and N meet the verification policy, to be specific, whether endorsementM and endorsementN in Tx2 have a same running result and a same data modification. In this embodiment of this application, the running results M and N are the same, and meet the verification policy.

Then the processing node checks whether a version number in local ledger data is consistent with data version numbers in Tx2 (to be specific, endorsementM and endorsementN in Tx2). After the checking, the version number in the local ledger data is consistent with the data version numbers in Tx2.

Finally, the processing node obtains the code of the restrictive condition interface of the smart contract based on CCID. The specific code is: stub.Get("BuyerId", "Money")>100 && stub.Get("OwnerID", "Asset_account")>1. The processing node runs the code of the restrictive condition interface of the smart contract based on the local ledger data with a running result of true, accepts a modification made by Tx2 to the data, and increases a version number of modified data by 1. Related data and version numbers are changed to the following:

**Table 7: Ledger data after Tx2 is accepted**

| Key | Version | Value |
|---|---|---|
| Owner_money | 103 | 4500 |
| Owner_asset_account | 103 | 0 |
| UserA_money | 56 | 500 |
| UserA_asset_account | 2 | 1 |
| UserC_money | 31 | 800 |
| UserC_asset_account | 2 | 1 |

### (3) Process Tx3

The processing node first determines whether running results M and N meet the verification policy, to be specific, whether endorsementM and endorsementN in Tx3 have a same running result and a same data modification. In this embodiment of this application, the running results M and N are the same, and meet the verification policy.

Then the processing node checks whether a version number in local ledger data is consistent with data version numbers in Tx3 (to be specific, endorsementM and endorsementN in Tx3). After the checking, the version number in the local ledger data is consistent with the data version numbers in Tx3.

Finally, the processing node obtains the code of the restrictive condition interface of the smart contract based on CCID. The specific code is: stub.Get("BuyerId", "Money")>100 && stub.Get("OwnerID", "Asset_account")>1. The processing node runs the code of the restrictive condition interface of the smart contract based on the local ledger data. In this case, because Owner_asset_account is 0, the transaction Tx3 cannot succeed in verification that is based on the restrictive condition interface. The processing node records Tx3 as an invalid transaction, and does not accept a modification made by Tx3 to the data.

It should be understood that sequence numbers of the foregoing processes do not mean particular execution sequences. The execution sequences of the processes should be determined based on functions and internal logic of the processes, and should not be construed as any limitation on the implementation processes of this embodiment of this application.

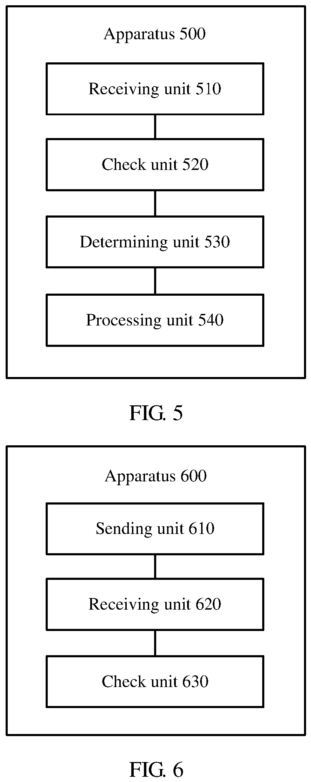

The foregoing describes in detail the method for running a smart contract in the embodiments of this application with reference to FIG. 1 to FIG. 4. The following describes in detail an apparatus for running a smart contract in the embodiments of this application with reference to FIG. 5 to FIG. 8.

FIG. 5 is a schematic block diagram of an apparatus 500 for running a smart contract according to an embodiment of this application. As shown in FIG. 5, the apparatus 500 includes a receiving unit 510, a check unit 520, a determining unit 530, and a processing unit 540.

The receiving unit 510 is configured to receive a transaction sent by a consensus service node. The transaction includes a plurality of running results generated in an endorsement process of the smart contract.

The check unit 520 is configured to check whether the plurality of running results meet a verification policy. The checking includes checking version numbers and data that are in the plurality of running results and that are generated by a program other than a restrictive condition in the smart contract, and the restrictive condition indicates a condition to be met by ledger data in a distributed network when the smart contract is run.

The determining unit 530 is configured to: when the plurality of running results meet the verification policy, identify the restrictive condition in the smart contract, and determine whether local ledger data meets the restrictive condition.

The processing unit 540 is configured to: when the local ledger data meets the restrictive condition, accept the transaction.

According to the apparatus for running a smart contract in this embodiment of this application, verification that is based on the restrictive condition corresponding to relatively frequently changed data is performed later. After the version numbers and the data that are in the plurality of running results of the transaction and that are unrelated to the restrictive condition meet the verification policy, it is verified whether the local ledger data meets the restrictive condition. This increases a success rate of writing a transaction to a ledger, and improves overall system performance.

Optionally, the apparatus 500 is an endorsement node, and the apparatus 500 further includes: an endorsement unit, configured to: before the transaction sent by the consensus service node is received, endorse the smart contract to obtain a running result of current endorsement; and a first sending unit, configured to send the running result of current endorsement to a client or a proxy node of the client, where the client or the proxy node of the client uses the running result of current endorsement in the transaction.

Optionally, the receiving unit 510 is further configured to receive a request that is sent by the client or the proxy node of the client for simulating running of the smart contract, where the request includes identification information of the smart contract; and that an endorsement unit is configured to: before the transaction sent by the consensus service node is received, endorse the smart contract to obtain a running result of current endorsement specifically includes: identifying the restrictive condition in the smart contract based on the identification information of the smart contract; and running the program other than the restrictive condition in the smart contract based on the local ledger data and signing, to obtain the running result of current endorsement.

Optionally, the receiving unit 510 is further configured to: before the smart contract is endorsed to obtain the running result of current endorsement, receive programs of the smart contract which are sent by the client or the proxy node of the client; the apparatus 500 further includes a parsing unit, configured to parse the programs of the smart contract to obtain a program of the restrictive condition; and the first sending unit is further configured to send the program of the restrictive condition to the client or the proxy node of the client.

Optionally, the apparatus 500 is a proxy node, and the apparatus 500 further includes a second sending unit, configured to: before the transaction sent by the consensus service node is received, send a request for simulating running of the smart contract to a plurality of endorsement nodes in the distributed network, where the request includes identification information of the smart contract; the receiving unit 510 is further configured to receive a running result that is sent by each of the plurality of endorsement nodes according to the request; the check unit 520 is further configured to check whether the plurality of received running results meet the verification policy, where the checking includes checking the version numbers and the data that are in the plurality of running results and that are generated by the program other than the restrictive condition; and the second sending unit is further configured to: when the plurality of running results meet the verification policy, send the plurality of running results to a client.

Optionally, the second sending unit is further configured to: before sending the request for simulating running of the smart contract to the plurality of endorsement nodes in the distributed network, send programs of the smart contract to the plurality of endorsement nodes; the receiving unit 510 is further configured to receive a program that is of the restrictive condition and that is sent by the plurality of endorsement nodes based on the programs of the smart contract; and the second sending unit is further configured to send the program of the restrictive condition to all processing nodes in the distributed network.

It should be understood that the apparatus 500 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs and a memory, a merge logic circuit, and/or another suitable component that supports the described functions. In an optional example, a person skilled in the art may understand that the apparatus 500 may be specifically the processing node in the distributed network in the foregoing method embodiment, and the apparatus 500 may be configured to perform procedures and/or steps corresponding to the processing node in the foregoing method embodiment. To avoid repetition, details are not described herein again.

FIG. 6 is a schematic block diagram of another apparatus 600 for running a smart contract according to an embodiment of this application. As shown in FIG. 6, the apparatus 600 includes a sending unit 610, a receiving unit 620, and a check unit 630.

The sending unit 610 is configured to send a request for simulating running of the smart contract to a plurality of endorsement nodes in a distributed network. The request includes identification information of the smart contract.

The receiving unit 620 is configured to receive a running result that is sent by each of the plurality of endorsement nodes according to the request.

The check unit 630 is configured to check whether the plurality of received running results meet a verification policy. The checking includes checking version numbers and data that are in the plurality of running results and that are generated by a program other than a restrictive condition in the smart contract, and the restrictive condition indicates a condition to be met by ledger data in the distributed network when the smart contract is run.

The sending unit 610 is further configured to: when the plurality of running results meet the verification policy, send a transaction including the plurality of running results to a consensus service node.

According to the apparatus for running a smart contract in this embodiment of this application, verification that is based on the restrictive condition corresponding to relatively frequently changed data is performed later. After the version numbers and the data that are in the plurality of running results of the transaction and that are unrelated to the restrictive condition meet the verification policy, it is verified whether local ledger data meets the restrictive condition. This increases a success rate of writing a transaction to a ledger, and improves overall system performance.

Optionally, the sending unit 610 is further configured to: before sending the request for simulating running of the smart contract to the plurality of endorsement nodes in the distributed network, send programs of the smart contract to the plurality of endorsement nodes; the receiving unit 620 is further configured to receive a program that is of the restrictive condition and that is sent by the plurality of endorsement nodes based on the programs of the smart contract; and the sending unit 610 is further configured to send the program of the restrictive condition to all processing nodes in the distributed network.

It should be understood that the apparatus 600 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs and a memory, a merge logic circuit, and/or another suitable component that supports the described functions. In an optional example, a person skilled in the art may understand that the apparatus 600 may be specifically the client in the foregoing method embodiment, and the apparatus 600 may be configured to perform procedures and/or steps corresponding to the client in the foregoing method embodiment. To avoid repetition, details are not described herein again.

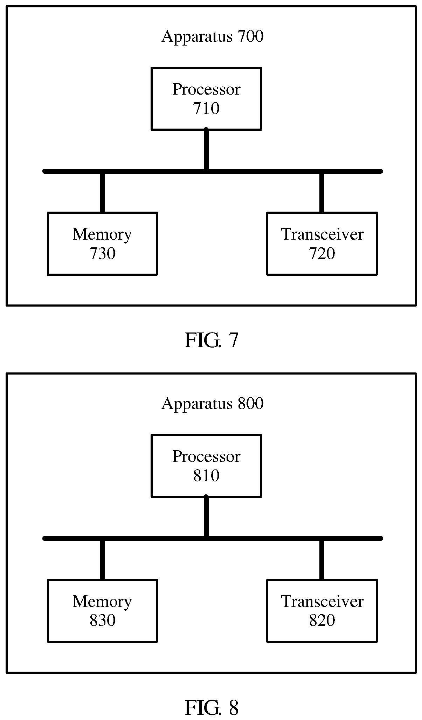

FIG. 7 is a schematic block diagram of another apparatus 700 for running a smart contract according to an embodiment of this application. The apparatus 700 includes a processor 710, a transceiver 720, and a memory 730. The processor 710, the transceiver 720, and the memory 730 communicate with each other through an internal connection chain. The memory 730 is configured to store an instruction. The processor 710 is configured to execute the instruction stored in the memory 730, to control the transceiver 720 to send a signal and/or receive a signal.

The transceiver 720 is configured to receive a transaction sent by a consensus service node. The transaction includes a plurality of running results generated in an endorsement process of the smart contract.

The processor 710 is configured to: check whether the plurality of running results meet a verification policy, where the checking includes checking version numbers and data that are in the plurality of running results and that are generated by a program other than a restrictive condition in the smart contract, and the restrictive condition indicates a condition to be met by ledger data in a distributed network when the smart contract is run; when the plurality of running results meet the verification policy, identify the restrictive condition in the smart contract, and determine whether local ledger data meets the restrictive condition; and when the local ledger data meets the restrictive condition, accept the transaction.

It should be understood that the apparatus 700 may be specifically the processing node in the distributed network in the foregoing method embodiment, and may be configured to perform procedures and/or steps corresponding to the processing node in the foregoing method embodiment. Optionally, the memory 730 may include a read-only memory and a random access memory, and provide an instruction and data to the processor. A part of the memory may further include a non-volatile random access memory. For example, the memory may further store device type information. The processor 710 may be configured to execute the instruction stored in the memory. In addition, when the processor 710 executes the instruction stored in the memory, the processor 710 is configured to perform the procedures and/or the steps corresponding to the processing node in the foregoing method embodiment.

FIG. 8 is a schematic block diagram of another apparatus 800 for running a smart contract according to an embodiment of this application. The apparatus 800 includes a processor 810, a transceiver 820, and a memory 830. The processor 810, the transceiver 820, and the memory 830 communicate with each other through an internal connection chain. The memory 830 is configured to store an instruction. The processor 810 is configured to execute the instruction stored in the memory 830, to control the transceiver 820 to send a signal and/or receive a signal.

The transceiver 820 is configured to: send a request for simulating running of the smart contract to a plurality of endorsement nodes in a distributed network, where the request includes identification information of the smart contract; and receive a running result that is sent by each of the plurality of endorsement nodes according to the request.

The processor 810 is configured to check whether the plurality of received running results meet a verification policy. The checking includes checking version numbers and data that are in the plurality of running results and that are generated by a program other than a restrictive condition in the smart contract, and the restrictive condition indicates a condition to be met by ledger data in the distributed network when the smart contract is run.

The transceiver 820 is further configured to: when the plurality of running results meet the verification policy, send a transaction including the plurality of running results to a consensus service node.

It should be understood that the apparatus 800 may be specifically the client in the foregoing method embodiment, and may be configured to perform procedures and/or steps corresponding to the client in the foregoing method embodiment. Optionally, the memory 830 may include a read-only memory and a random access memory, and provide an instruction and data to the processor. A part of the memory may further include a non-volatile random access memory. For example, the memory may further store device type information. The processor 810 may be configured to execute the instruction stored in the memory. In addition, when the processor 810 executes the instruction stored in the memory, the processor 810 is configured to perform the procedures and/or the steps corresponding to the client in the foregoing embodiment.

It should be understood that, in the embodiments of this application, the processor of the apparatus may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the method disclosed with reference to the embodiments of this application may be directly performed by a hardware processor, or may be performed by using a combination of hardware in the processor and a software unit. The software unit may be located in a mature storage medium in the art, such as a random access memory, a flash memory, a read-only memory, a programmable read-only memory, an electrically erasable programmable memory, or a register. The storage medium is located in the memory, and the processor reads instructions in the memory and completes the steps in the foregoing methods in combination with hardware of the processor. To avoid repetition, details are not described herein again.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments in any appropriate manner. It should be understood that in the embodiments of this application, sequence numbers of the foregoing processes do not mean particular execution sequences. The execution sequences of the processes should be determined based on functions and internal logic of the processes, and should not be construed as any limitation on the implementation processes of the embodiments of this application.

In addition, the terms "system" and "network" may be often used interchangeably in this specification. The term "and/or" in this specification describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be understood that in the embodiments of this application, "B corresponding to A" indicates that B is associated with A, and B may be determined based on A. However, it should be further understood that determining A based on B does not mean that B is determined based on only A, and B may be determined based on A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between the apparatuses or units may be implemented in electrical, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of the embodiments of this application.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The storage medium includes various media that can store program code, such as a USB flash drive, a removable hard disk, a read-only memory (read-only memory, ROM), a random access memory (random access memory, RAM), a magnetic disk, or an optical disc.

## Claims

1. A method for running a smart contract, wherein the method is applied to a distributed network, and comprises:
receiving, by a processing node in the distributed network, a transaction sent by a consensus service node, wherein the transaction comprises a plurality of running results generated in an endorsement process of the smart contract;
checking, by the processing node, whether the plurality of running results received from the consensus service node meet a verification policy, wherein the checking comprises checking version numbers and data that are in the plurality of running results received from the consensus service node and that are generated by a program other than a restrictive condition in the smart contract, wherein the restrictive condition indicates a condition to be met by ledger data in the distributed network when the smart contract is run;
when the plurality of running results received from the consensus service node meet the verification policy, identifying, by the processing node, the restrictive condition in the smart contract, and determining whether local ledger data meets the restrictive condition; and
when the local ledger data meets the restrictive condition, accepting, by the processing node, the transaction.

2. The method according to claim 1, wherein the processing node is an endorsement node, and before the receiving, by a processing node, a transaction sent by a consensus service node, the method further comprises:
endorsing, by the processing node, the smart contract to obtain a running result of current endorsement; and
sending, by the processing node, the running result of current endorsement to a client or a proxy node of the client, wherein the client or the proxy node of the client is to use the running result of current endorsement in the transaction.

3. The method according to claim 2, wherein the endorsing, by the processing node, the smart contract to obtain a running result of current endorsement comprises:
receiving, by the processing node, a request that is sent by the client or the proxy node of the client for simulating running of the smart contract, wherein the request comprises identification information of the smart contract;
identifying, by the processing node, the restrictive condition in the smart contract based on the identification information of the smart contract; and
running, by the processing node, the program other than the restrictive condition in the smart contract based on the local ledger data and signing, to obtain the running result of current endorsement.

4. The method according to claim 2 or 3, wherein before the endorsing, by the processing node, the smart contract to obtain a running result of current endorsement, the method further comprises:
receiving, by the processing node, programs that are of the smart contract and that are sent by the client or the proxy node of the client;
parsing, by the processing node, the programs of the smart contract to obtain a program of the restrictive condition; and
sending, by the processing node, the program of the restrictive condition to the client or the proxy node of the client.

5. The method according to claim 1, wherein the processing node is a proxy node, and before the receiving, by a processing node, a transaction sent by a consensus service node, the method further comprises:
sending, by the processing node, a request for simulating running of the smart contract to a plurality of endorsement nodes in the distributed network, wherein the request comprises identification information of the smart contract;
receiving, by the processing node, a running result that is sent by each of the plurality of endorsement nodes according to the request;
checking, by the processing node, whether the plurality of running results received from the plurality of endorsement nodes meet the verification policy, wherein the checking comprises checking version numbers and data that are in the plurality of running results received from the plurality of endorsement nodes and that are generated by the program other than the restrictive condition; and
when the plurality of running results received from the plurality of endorsement nodes meet the verification policy, sending, by the processing node, the plurality of running results to a client.

6. The method according to claim 5, wherein before the sending, by the processing node, a request for simulating running of the smart contract to a plurality of endorsement nodes in the distributed network, the method further comprises:
sending, by the processing node, programs of the smart contract to the plurality of endorsement nodes;
receiving, by the processing node, a program that is of the restrictive condition and that is sent by the plurality of endorsement nodes based on the programs of the smart contract; and
sending, by the processing node, the program of the restrictive condition to all processing nodes in the distributed network.

7. A method for running a smart contract, comprising:
sending, by a client, a request for simulating running of the smart contract to a plurality of endorsement nodes in a distributed network, wherein the request comprises identification information of the smart contract;
receiving, by the client, a running result that is sent by each of the plurality of endorsement nodes according to the request;
checking, by the client, whether the plurality of received running results meet a verification policy, wherein the checking comprises checking version numbers and data that are in the plurality of running results and that are generated by a program other than a restrictive condition in the smart contract, wherein the restrictive condition indicates a condition to be met by ledger data in the distributed network when the smart contract is run; and
when the plurality of running results meet the verification policy, sending, by the client, a transaction comprising the plurality of running results to a consensus service node.

8. The method according to claim 7, wherein before the sending, by a client, a request for simulating running of a smart contract to a plurality of endorsement nodes in a distributed network, the method further comprises:
sending, by the client, programs of the smart contract to the plurality of endorsement nodes;
receiving, by the client, a program that is of the restrictive condition and that is sent by the plurality of endorsement nodes based on the program of the smart contract; and
sending, by the client, the program of the restrictive condition to all processing nodes in the distributed network.

9. An apparatus for running a smart contract, wherein the apparatus is applied to a distributed network, and comprises:
a receiving unit, configured to receive a transaction sent by a consensus service node, wherein the transaction comprises a plurality of running results generated in an endorsement process of the smart contract;
a check unit, configured to check whether the plurality of running results received from the consensus service node meet a verification policy, wherein the checking comprises checking version numbers and data that are in the plurality of running results received from the consensus service node and that are generated by a program other than a restrictive condition in the smart contract, wherein the restrictive condition indicates a condition to be met by ledger data in the distributed network when the smart contract is run;
a determining unit, configured to: when the plurality of running results received from the consensus service node meet the verification policy, identify the restrictive condition in the smart contract, and determine whether local ledger data meets the restrictive condition; and
a processing unit, configured to: when the local ledger data meets the restrictive condition, accept the transaction.

10. The apparatus according to claim 9, wherein the apparatus is an endorsement node, and the apparatus further comprises:
an endorsement unit, configured to: before the transaction sent by the consensus service node is received, endorse the smart contract to obtain a running result of current endorsement; and
a first sending unit, configured to send the running result of current endorsement to a client or a proxy node of the client, wherein the client or the proxy node of the client is to use the running result of current endorsement in the transaction.

11. The apparatus according to claim 10, wherein the receiving unit is further configured to:
receive a request that is sent by the client or the proxy node of the client for simulating running of the smart contract, wherein the request comprises identification information of the smart contract; and
that an endorsement unit is configured to: before the transaction sent by the consensus service node is received, endorse the smart contract to obtain a running result of current endorsement specifically comprises:
identifying the restrictive condition in the smart contract based on the identification information of the smart contract; and
running the program other than the restrictive condition in the smart contract based on the local ledger data and signing, to obtain the running result of current endorsement.

12. The apparatus according to claim 9, wherein the apparatus is a proxy node, and the apparatus further comprises:
a second sending unit, configured to: before the transaction sent by the consensus service node is received, send a request for simulating running of the smart contract to a plurality of endorsement nodes in the distributed network, wherein the request comprises identification information of the smart contract;
the receiving unit is further configured to:
receive a running result that is sent by each of the plurality of endorsement nodes according to the request;
the check unit is further configured to:
check whether the plurality of running results received from the plurality of endorsement nodes meet the verification policy, wherein the checking comprises checking version numbers and data that are in the plurality of running results received from the plurality of endorsement nodes and that are generated by the program other than the restrictive condition; and
the second sending unit is further configured to:
when the plurality of running results received from the plurality of endorsement nodes meet the verification policy, send the plurality of running results to a client.

13. The apparatus according to claim 12, wherein the second sending unit is further configured to:
before sending the request for simulating running of the smart contract to the plurality of endorsement nodes in the distributed network, send programs of the smart contract to the plurality of endorsement nodes;
the receiving unit is further configured to:
receive a program that is of the restrictive condition and that is sent by the plurality of endorsement nodes based on the programs of the smart contract; and
the second sending unit is further configured to:
send the program of the restrictive condition to all processing nodes in the distributed network.

14. An apparatus for running a smart contract, wherein the apparatus comprises:
a sending unit, configured to send a request for simulating running of the smart contract to a plurality of endorsement nodes in a distributed network, wherein the request comprises identification information of the smart contract;
a receiving unit, configured to receive a running result that is sent by each of the plurality of endorsement nodes according to the request; and
a check unit, configured to check whether the plurality of received running results meet a verification policy, wherein the checking comprises checking version numbers and data that are in the plurality of running results and that are generated by a program other than a restrictive condition in the smart contract, wherein the restrictive condition indicates a condition to be met by ledger data in the distributed network when the smart contract is run; wherein
the sending unit is further configured to:
when the plurality of running results meet the verification policy, send a transaction comprising the plurality of running results to a consensus service node.

15. The apparatus according to claim 14, wherein the sending unit is further configured to:
before sending the request for simulating running of the smart contract to the plurality of endorsement nodes in the distributed network, send programs of the smart contract to the plurality of endorsement nodes;
the receiving unit is further configured to:
receive a program that is of the restrictive condition and that is sent by the plurality of endorsement nodes based on the programs of the smart contract; and
the sending unit is further configured to:
send the program of the restrictive condition to all processing nodes in the distributed network.

## Patentansprüche

1. Verfahren zum Ausführen eines Smart Contracts, wobei das Verfahren auf ein verteiltes Netzwerk angewendet wird und Folgendes umfasst:
Empfangen, durch einen Verarbeitungsknoten in dem verteilten Netzwerk, einer Transaktion, die durch einen Konsensdienstknoten gesendet wird, wobei die Transaktion mehrere Ausführungsergebnisse umfasst, die in einem Endorsement-Vorgang des Smart Contracts generiert werden;
Überprüfen, durch den Verarbeitungsknoten, ob die mehreren Ausführungsergebnisse, die von dem Konsensdienstknoten empfangen werden, eine Verifizierungsrichtlinie erfüllen, wobei das Überprüfen das Überprüfen von Versionsnummern und Daten umfasst, die sich in den mehreren Ausführungsergebnissen befinden, die von dem Konsensdienstknoten empfangen werden, und die durch ein anderes Programm als eine einschränkende Bedingung in dem Smart Contract generiert werden, wobei die einschränkende Bedingung eine Bedingung angibt, die durch Ledger-Daten in dem verteilten Netzwerk zu erfüllen ist, wenn der Smart Contract ausgeführt wird;
wenn die mehreren Ausführungsergebnisse, die von dem Konsensdienstknoten empfangen werden, die Verifizierungsrichtlinie erfüllen, Identifizieren, durch den Verarbeitungsknoten, der einschränkenden Bedingung in dem Smart Contract und Bestimmen, ob Daten des lokalen Ledgers die einschränkende Bedingung erfüllen; und
wenn die Daten des lokalen Ledgers die einschränkende Bedingung erfüllen, Akzeptieren der Transaktion durch den Verarbeitungsknoten.

2. Verfahren nach Anspruch 1, wobei der Verarbeitungsknoten ein Endorsement-Knoten ist, und vor dem Empfangen, durch einen Verarbeitungsknoten, einer Transaktion, die durch einen Konsensdienstknoten gesendet wird, das Verfahren ferner Folgendes umfasst:
Durchführen des Endorsements des Smart Contracts durch den Verarbeitungsknoten, um ein Ausführungsergebnis des aktuellen Endorsements zu erhalten; und
Senden, durch den Verarbeitungsknoten, des Ausführungsergebnisses des aktuellen Endorsements an einen Client oder einen Proxy-Knoten des Clients, wobei der Client oder der Proxy-Knoten des Clients das Ausführungsergebnis des aktuellen Endorsements in der Transaktion verwenden soll.

3. Verfahren nach Anspruch 2, wobei das Durchführen des Endorsements des Smart Contracts durch den Verarbeitungsknoten, um ein Ausführungsergebnis des aktuellen Endorsements zu erhalten, Folgendes umfasst:
Empfangen, durch den Verarbeitungsknoten, einer Anforderung, die durch den Client oder den Proxy-Knoten des Clients gesendet wird, zum Simulieren des Ausführens des Smart Contracts, wobei die Anforderung Identifikationsinformationen des Smart Contracts umfasst;
Identifizieren, durch den Verarbeitungsknoten, der einschränkenden Bedingung in dem Smart Contract basierend auf den Identifikationsinformationen des Smart Contracts; und
Ausführen, durch den Verarbeitungsknoten, des anderen Programms als der einschränkenden Bedingung in dem Smart Contract basierend auf den Daten des lokalen Ledgers und Signieren, um das Ausführungsergebnis des aktuellen Endorsements zu erhalten.

4. Verfahren nach Anspruch 2 oder 3, wobei vor dem Durchführen des Endorsements des Smart Contracts durch den Verarbeitungsknoten, um ein Ausführungsergebnis des aktuellen Endorsements zu erhalten, das Verfahren ferner Folgendes umfasst:
Empfangen, durch den Verarbeitungsknoten, von Programmen, die zu dem Smart Contract gehören und die durch den Client oder den Proxy-Knoten des Clients gesendet werden;
Parsen, durch den Verarbeitungsknoten, der Programme des Smart Contracts, um ein Programm der einschränkenden Bedingung zu erhalten; und
Senden, durch den Verarbeitungsknoten, des Programms der einschränkenden Bedingung an den Client oder den Proxy-Knoten des Clients.

5. Verfahren nach Anspruch 1, wobei der Verarbeitungsknoten ein Proxy-Knoten ist, und vor dem Empfangen, durch einen Verarbeitungsknoten, einer Transaktion, die durch einen Konsensdienstknoten gesendet wird, das Verfahren ferner Folgendes umfasst:
Senden, durch den Verarbeitungsknoten, einer Anforderung zum Simulieren des Ausführens des Smart Contracts an mehrere Endorsement-Knoten in dem verteilten Netzwerk, wobei die Anforderung Identifikationsinformationen des Smart Contracts umfasst;
Empfangen, durch den Verarbeitungsknoten, eines Ausführungsergebnisses, das durch jeden der mehreren Endorsement-Knoten gemäß der Anforderung gesendet wird;
Überprüfen, durch den Verarbeitungsknoten, ob die mehreren Ausführungsergebnisse, die von den mehreren Endorsement-Knoten empfangen werden, die Verifizierungsrichtlinie erfüllen, wobei das Überprüfen das Überprüfen von Versionsnummern und Daten umfasst, die sich in den mehreren Ausführungsergebnissen befinden, die von den mehreren Endorsement-Knoten empfangen werden, und die durch das andere Programm als die einschränkende Bedingung generiert werden; und
wenn die mehreren Ausführungsergebnisse, die von den mehreren Endorsement-Knoten empfangen werden, die Verifizierungsrichtlinie erfüllen, Senden, durch den Verarbeitungsknoten, der mehreren Ausführungsergebnisse an einen Client.

6. Verfahren nach Anspruch 5, wobei vor dem Senden, durch den Verarbeitungsknoten, einer Anforderung zum Simulieren des Ausführens des Smart Contracts an mehrere Endorsement-Knoten in dem verteilten Netzwerk das Verfahren ferner Folgendes umfasst:
Senden, durch den Verarbeitungsknoten, von Programmen des Smart Contracts an die mehreren Endorsement-Knoten;
Empfangen, durch den Verarbeitungsknoten, eines Programms, das zu der einschränkenden Bedingung gehört und das durch mehrere Endorsement-Knoten basierend auf den Programmen des Smart Contracts gesendet wird; und
Senden, durch den Verarbeitungsknoten, des Programms der einschränkenden Bedingung an alle Verarbeitungsknoten in dem verteilten Netzwerk.

7. Verfahren zum Ausführen eines Smart Contracts, das Folgendes umfasst:
Senden, durch einen Client, einer Anforderung zum Simulieren des Ausführens des Smart Contracts an mehrere Endorsement-Knoten in einem verteilten Netzwerk, wobei die Anforderung Identifikationsinformationen des Smart Contracts umfasst;
Empfangen, durch den Client, eines Ausführungsergebnisses, das durch jeden der mehreren Endorsement-Knoten gemäß der Anforderung gesendet wird;
Überprüfen, durch den Client, ob die mehreren empfangenen Ausführungsergebnisse eine Verifizierungsrichtlinie erfüllen, wobei das Überprüfen das Überprüfen von Versionsnummern und Daten umfasst, die sich in den mehreren Ausführungsergebnissen befinden und die durch ein anderes Programm als eine einschränkende Bedingung in dem Smart Contract generiert werden, wobei die einschränkende Bedingung eine Bedingung angibt, die durch Ledger-Daten in dem verteilten Netzwerk zu erfüllen ist, wenn der Smart Contract ausgeführt wird; und
wenn die mehreren Ausführungsergebnisse die Verifizierungsrichtlinie erfüllen, Senden, durch den Client, einer Transaktion, die die mehreren Ausführungsergebnisse umfasst, an einen Konsensdienstknoten.

8. Verfahren nach Anspruch 7, wobei vor dem Senden, durch einen Client, einer Anforderung zum Simulieren des Ausführens eines Smart Contracts an mehrere Endorsement-Knoten in einem verteilten Netzwerk das Verfahren ferner Folgendes umfasst:
Senden, durch den Client, von Programmen des Smart Contracts an die mehreren Endorsement-Knoten;
Empfangen, durch den Client, eines Programms, das zu der einschränkenden Bedingung gehört und das durch mehrere Endorsement-Knoten basierend auf dem Programm des Smart Contracts gesendet wird; und
Senden, durch den Client, des Programms der einschränkenden Bedingung an alle Verarbeitungsknoten in dem verteilten Netzwerk.

9. Vorrichtung zum Ausführen eines Smart Contracts, wobei die Vorrichtung auf ein verteiltes Netzwerk angewendet wird und Folgendes umfasst:
eine Empfangseinheit, die konfiguriert ist, um eine Transaktion zu empfangen, die durch einen Konsensdienstknoten gesendet wird, wobei die Transaktion mehrere Ausführungsergebnisse umfasst, die in einem Endorsement-Vorgang des Smart Contracts generiert werden;
eine Überprüfungseinheit, die konfiguriert ist, um zu überprüfen, ob die mehreren Ausführungsergebnisse, die von dem Konsensdienstknoten empfangen werden, eine Verifizierungsrichtlinie erfüllen, wobei das Überprüfen das Überprüfen von Versionsnummern und Daten umfasst, die sich in den mehreren Ausführungsergebnissen befinden, die von dem Konsensdienstknoten empfangen werden, und die durch ein anderes Programm als eine einschränkende Bedingung in dem Smart Contract generiert werden, wobei die einschränkende Bedingung eine Bedingung angibt, die durch Ledger-Daten in dem verteilten Netzwerk zu erfüllen ist, wenn der Smart Contract ausgeführt wird;
eine Bestimmungseinheit, die zu Folgendem konfiguriert ist: wenn die mehreren Ausführungsergebnisse, die von dem Konsensdienstknoten empfangen werden, die Verifizierungsrichtlinie erfüllen, Identifizieren der einschränkenden Bedingung in dem Smart Contract und Bestimmen, ob Daten des lokalen Ledgers die einschränkende Bedingung erfüllen; und
eine Verarbeitungseinheit, die zu Folgendem konfiguriert ist: wenn die Daten des lokalen Ledgers die einschränkende Bedingung erfüllen, Akzeptieren der Transaktion.

10. Vorrichtung nach Anspruch 9, wobei die Vorrichtung ein Endorsement-Knoten ist und Folgendes umfasst:
eine Endorsement-Einheit, die zu Folgendem konfiguriert ist: bevor die Transaktion, die durch den Konsensdienstknoten gesendet wird, empfangen wird, Durchführen des Endorsements des Smart Contracts, um ein Ausführungsergebnis des aktuellen Endorsements zu erhalten; und
eine erste Sendeeinheit, die konfiguriert ist, um das Ausführungsergebnis des aktuellen Endorsements an den Client oder einen Proxy-Knoten des Clients zu senden, wobei der Client oder der Proxy-Knoten des Clients das Ausführungsergebnis des aktuellen Endorsements in der Transaktion verwenden soll.

11. Vorrichtung nach Anspruch 10, wobei die Empfangseinheit ferner zu Folgendem konfiguriert ist:
Empfangen einer Anforderung, die durch den Client oder den Proxy-Knoten des Clients gesendet wird, zum Simulieren des Ausführens des Smart Contracts, wobei die Anforderung Identifikationsinformationen des Smart Contracts umfasst; und
dass eine Endorsement-Einheit zu Folgendem konfiguriert ist: bevor die Transaktion, die durch den Konsensdienstknoten gesendet wird, empfangen wird, Durchführen des Endorsements des Smart Contracts, um ein Ausführungsergebnis des aktuellen Endorsements zu erhalten, speziell Folgendes umfasst:
Identifizieren der einschränkenden Bedingung in dem Smart Contract basierend auf den Identifikationsinformationen des Smart Contracts; und
Ausführen des anderen Programms als der einschränkenden Bedingung in dem Smart Contract basierend auf den Daten des lokalen Ledgers und Signieren, um das Ausführungsergebnis des aktuellen Endorsements zu erhalten.

12. Vorrichtung nach Anspruch 9, wobei die Vorrichtung ein Proxy-Knoten ist und die Vorrichtung ferner Folgendes umfasst:
eine zweite Sendeeinheit, die zu Folgendem konfiguriert ist: bevor die Transaktion, die durch den Konsensdienstknoten gesendet wird, empfangen wird, Senden einer Anforderung zum Simulieren des Ausführens des Smart Contracts an mehrere Endorsement-Knoten in dem verteilten Netzwerk, wobei die Anforderung Identifikationsinformationen des Smart Contracts umfasst;
die Empfangseinheit ferner zu Folgendem konfiguriert ist:
Empfangen eines Ausführungsergebnisses, das durch jeden der mehreren Endorsement-Knoten gemäß der Anforderung gesendet wird;
die Überprüfungseinheit ferner zu Folgendem konfiguriert ist:
Überprüfen, ob die mehreren Ausführungsergebnisse, die von den mehreren Endorsement-Knoten empfangen werden, die Verifizierungsrichtlinie erfüllen, wobei das Überprüfen das Überprüfen von Versionsnummern und Daten umfasst, die sich in den mehreren Ausführungsergebnissen befinden, die von den mehreren Endorsement-Knoten empfangen werden, und die durch das andere Programm als die einschränkende Bedingung generiert werden; und
die zweite Sendeeinheit ferner zu Folgendem konfiguriert ist:
wenn die mehreren Ausführungsergebnisse, die von den mehreren Endorsement-Knoten empfangen werden, die Verifizierungsrichtlinie erfüllen, Senden der mehreren Ausführungsergebnisse an einen Client.

13. Vorrichtung nach Anspruch 12, wobei die zweite Sendeeinheit ferner zu Folgendem konfiguriert ist:
vor dem Senden der Anforderung zum Simulieren des Ausführens des Smart Contracts an die mehreren Endorsement-Knoten in dem verteilten Netzwerk, Senden von Programmen des Smart Contracts an die mehreren Endorsement-Knoten;
die Empfangseinheit ferner zu Folgendem konfiguriert ist:
Empfangen eines Programms, das zu der einschränkenden Bedingung gehört und das durch mehrere Endorsement-Knoten basierend auf den Programmen des Smart Contracts gesendet wird; und
die zweite Sendeeinheit ferner zu Folgendem konfiguriert ist:
Senden des Programms der einschränkenden Bedingung an alle Verarbeitungsknoten in dem verteilten Netzwerk.

14. Vorrichtung zum Ausführen eines Smart Contracts, wobei die Vorrichtung Folgendes umfasst:
eine Sendeeinheit, die konfiguriert ist, um eine Anforderung zum Simulieren des Ausführens des Smart Contracts an mehrere Endorsement-Knoten in einem verteilten Netzwerk zu senden, wobei die Anforderung Identifikationsinformationen des Smart Contracts umfasst;
eine Empfangseinheit, die konfiguriert ist, um ein Ausführungsergebnis zu empfangen, das durch jeden der mehreren Endorsement-Knoten gemäß der Anforderung gesendet wird; und
eine Überprüfungseinheit, die konfiguriert ist, um zu überprüfen, ob die mehreren empfangenen Ausführungsergebnisse eine Verifizierungsrichtlinie erfüllen, wobei das Überprüfen das Überprüfen von Versionsnummern und Daten umfasst, die sich in den mehreren Ausführungsergebnissen befinden und die durch ein anderes Programm als eine einschränkende Bedingung in dem Smart Contract generiert werden, wobei die einschränkende Bedingung eine Bedingung angibt, die durch Ledger-Daten in dem verteilten Netzwerk zu erfüllen ist, wenn der Smart Contract ausgeführt wird; wobei
die Sendeeinheit ferner zu Folgendem konfiguriert ist:
wenn die mehreren Ausführungsergebnisse die Verifizierungsrichtlinie erfüllen, Senden einer Transaktion, die die mehreren Ausführungsergebnisse umfasst, an einen Konsensdienstknoten.

15. Vorrichtung nach Anspruch 14, wobei die Sendeeinheit ferner zu Folgendem konfiguriert ist:
vor dem Senden der Anforderung zum Simulieren des Ausführens des Smart Contracts an die mehreren Endorsement-Knoten in dem verteilten Netzwerk, Senden von Programmen des Smart Contracts an die mehreren Endorsement-Knoten;
die Empfangseinheit ferner zu Folgendem konfiguriert ist:
Empfangen eines Programms, das zu der einschränkenden Bedingung gehört und das durch mehrere Endorsement-Knoten basierend auf den Programmen des Smart Contracts gesendet wird; und
die Sendeeinheit ferner zu Folgendem konfiguriert ist:
Senden des Programms der einschränkenden Bedingung an alle Verarbeitungsknoten in dem verteilten Netzwerk.

## Revendications

1. Procédé d'exécution d'un contrat intelligent, dans lequel le procédé est appliqué à un réseau distribué et comprend :
la réception, par un nœud de traitement dans le réseau distribué, d'une transaction envoyée par un nœud de service de consensus, la transaction comprenant une pluralité de résultats d'exécution générés dans un processus d'approbation du contrat intelligent ;
la vérification, par le nœud de traitement, si la pluralité de résultats d'exécution reçus du nœud de service de consensus satisfont une politique de vérification, la vérification comprenant des numéros de version de vérification et des données qui se trouvent dans la pluralité de résultats d'exécution reçus depuis le nœud de service de consensus et qui sont générés par un programme autre qu'une condition restrictive dans le contrat intelligent, dans lequel la condition restrictive indique une condition à satisfaire par des données du grand livre dans le réseau distribué lorsque le contrat intelligent est exécuté ;
lorsque la pluralité de résultats d'exécution reçus depuis le nœud de service de consensus satisfont la politique de vérification, l'identification, par le nœud de traitement, de la condition restrictive dans le contrat intelligent et la détermination du fait de savoir si les données de grand livre local satisfont la condition restrictive ; et
lorsque les données de grand livre local satisfont la condition restrictive, l'acceptation, par le nœud de traitement, de la transaction.

2. Procédé selon la revendication 1, dans lequel le nœud de traitement est un nœud d'approbation, et avant la réception, par un nœud de traitement, d'une transaction envoyée par un nœud de service de consensus, le procédé comprend en outre :
l'approbation, par le nœud de traitement, du contrat intelligent pour obtenir un résultat d'exécution de l'approbation actuelle ; et
l'envoi, par le nœud de traitement, du résultat d'exécution de l'approbation actuelle à un client ou à un nœud mandataire du client, le client ou le nœud mandataire du client devant utiliser le résultat d'exécution de l'approbation actuelle dans la transaction.

3. Procédé selon la revendication 2, dans lequel l'approbation, par le nœud de traitement, du contrat intelligent pour obtenir un résultat d'exécution de l'approbation actuelle comprend :
la réception, par le nœud de traitement, d'une demande qui est envoyée par le client ou le nœud mandataire du client pour simuler l'exécution du contrat intelligent, la demande comprenant des informations d'identification du contrat intelligent ;
l'identification, par le nœud de traitement, de la condition restrictive dans le contrat intelligent sur la base des informations d'identification du contrat intelligent ; et
l'exécution, par le nœud de traitement, du programme autre que la condition restrictive dans le contrat intelligent sur la base des données de grand livre local et la signature, pour obtenir le résultat d'exécution de l'approbation actuelle.

4. Procédé selon la revendication 2 ou 3, dans lequel avant l'approbation, par le nœud de traitement, du contrat intelligent pour obtenir un résultat d'exécution de l'approbation actuelle, le procédé comprend en outre :
la réception, par le nœud de traitement, des programmes qui sont du contrat intelligent et qui sont envoyés par le client ou le nœud mandataire du client ;
l'analyse, par le nœud de traitement, des programmes du contrat intelligent pour obtenir un programme de la condition restrictive ; et
l'envoi, par le nœud de traitement, du programme de la condition restrictive au client ou au nœud mandataire du client.

5. Procédé selon la revendication 1, dans lequel le nœud de traitement est un nœud mandataire, et avant la réception, par un nœud de traitement, d'une transaction envoyée par un nœud de service de consensus, le procédé comprend en outre :
l'envoi, par le nœud de traitement, d'une demande pour simuler l'exécution du contrat intelligent à une pluralité de nœuds d'approbation dans le réseau distribué, la demande comprenant des informations d'identification du contrat intelligent ;
la réception, par le nœud de traitement, d'un résultat d'exécution qui est envoyé par chacun de la pluralité de nœuds d'approbation selon la demande ;
la vérification, par le nœud de traitement, si la pluralité de résultats d'exécution reçus depuis la pluralité de nœuds d'approbation satisfont la politique de vérification, la vérification comprenant des numéros de version de vérification et des données qui se trouvent dans la pluralité de résultats d'exécution reçus depuis la pluralité de nœuds d'approbation et qui sont générés par le programme autre que la condition restrictive ; et
lorsque la pluralité de résultats d'exécution reçus depuis la pluralité de nœuds d'approbation satisfont la politique de vérification, l'envoi, par le nœud de traitement, de la pluralité de résultats d'exécution à un client.

6. Procédé selon la revendication 5, dans lequel avant l'envoi, par le nœud de traitement, d'une demande pour simuler l'exécution du contrat intelligent à une pluralité de nœuds d'approbation dans le réseau distribué, le procédé comprend en outre :
l'envoi, par le nœud de traitement, de programmes du contrat intelligent à la pluralité de nœuds d'approbation ;
la réception, par le nœud de traitement, d'un programme qui est de la condition restrictive et qui est envoyé par la pluralité de nœuds d'approbation sur la base des programmes du contrat intelligent ; et
l'envoi, par le nœud de traitement, du programme de la condition restrictive à tous les nœuds de traitement dans le réseau distribué.

7. Procédé d'exécution d'un contrat intelligent, comprenant :
l'envoi, par un client, d'une demande de simulation de l'exécution du contrat intelligent à une pluralité de nœuds d'approbation dans un réseau distribué, la demande comprenant des informations d'identification du contrat intelligent ;
la réception, par le client, d'un résultat d'exécution qui est envoyé par chacun de la pluralité de nœuds d'approbation selon la demande ;
la vérification, par le client, si la pluralité de résultats d'exécution reçus satisfont une politique de vérification, la vérification comprenant des numéros de version de vérification et des données qui se trouvent dans la pluralité de résultats d'exécution et qui sont générés par un programme autre qu'une condition restrictive dans le contrat intelligent, la condition restrictive indiquant une condition à satisfaire par les données de grand livre dans le réseau distribué lorsque le contrat intelligent est exécuté ; et
lorsque la pluralité de résultats d'exécution satisfont à la politique de vérification, l'envoi, par le client, d'une transaction comprenant la pluralité de résultats d'exécution à un nœud de service de consensus.

8. Procédé selon la revendication 7, dans lequel avant l'envoi, par un client, d'une demande de simulation de l'exécution d'un contrat intelligent à une pluralité de nœuds d'approbation dans un réseau distribué, le procédé comprend en outre :
l'envoi, par le client, de programmes du contrat intelligent à la pluralité de nœuds d'approbation ;
la réception, par le client, d'un programme qui est de la condition restrictive et qui est envoyé par la pluralité de nœuds d'approbation sur la base du programme du contrat intelligent ; et
l'envoi, par le client, du programme de la condition restrictive à tous les nœuds de traitement dans le réseau distribué.

9. Appareil d'exécution d'un contrat intelligent, dans lequel l'appareil est appliqué à un réseau distribué et comprend :
une unité de réception, configurée pour recevoir une transaction envoyée par un nœud de service de consensus, la transaction comprenant une pluralité de résultats d'exécution générés dans un processus d'approbation du contrat intelligent ;
une unité de vérification, configurée pour vérifier si la pluralité de résultats d'exécution reçus depuis le nœud de service de consensus satisfont une politique de vérification, la vérification comprenant des numéros de version de vérification et des données qui se trouvent dans la pluralité de résultats d'exécution reçus depuis le nœud de service de consensus et qui sont générés par un programme autre qu'une condition restrictive dans le contrat intelligent, la condition restrictive indiquant une condition à satisfaire par les données de grand livre dans le réseau distribué lorsque le contrat intelligent est exécuté ;
une unité de détermination, configurée pour : lorsque la pluralité de résultats d'exécution reçus depuis le nœud de service de consensus satisfont la politique de vérification, identifier la condition restrictive dans le contrat intelligent et déterminer si les données de grand livre local satisfont la condition restrictive ; et
une unité de traitement, configurée pour : lorsque les données de grand livre local satisfont la condition restrictive, accepter la transaction.

10. Appareil selon la revendication 9, dans lequel l'appareil est un nœud d'approbation, et l'appareil comprend en outre :
une unité d'approbation, configurée pour : avant la réception de la transaction envoyée par le nœud de service de consensus, approuver le contrat intelligent pour obtenir un résultat d'exécution de l'approbation actuelle ; et
une première unité d'envoi, configurée pour envoyer le résultat d'exécution de l'approbation actuelle à un client ou à un nœud mandataire du client, le client ou le nœud mandataire du client devant utiliser le résultat d'exécution de l'approbation actuelle dans la transaction.

11. Appareil selon la revendication 10, dans lequel l'unité d'évaluation est en outre configurée pour :
recevoir une demande qui est envoyée par le client ou le nœud mandataire du client pour simuler l'exécution du contrat intelligent, la demande comprenant des informations d'identification du contrat intelligent ; et
en ce qu'une unité d'approbation est configurée pour : avant la réception de la transaction envoyée par le nœud de service de consensus, approuver le contrat intelligent pour obtenir un résultat d'exécution de l'approbation actuelle comprend spécifiquement :
l'identification de la condition restrictive dans le contrat intelligent sur la base des informations d'identification du contrat intelligent ; et
l'exécution du programme autre que la condition restrictive dans le contrat intelligent sur la base des données du grand livre local et la signature, pour obtenir le résultat d'exécution de l'approbation actuelle.

12. Appareil selon la revendication 9, dans lequel l'appareil est un nœud mandataire, et l'appareil comprend en outre :
une seconde unité d'envoi, configurée pour : avant la réception de la transaction envoyée par le nœud de service de consensus, envoyer une demande pour simuler l'exécution du contrat intelligent à une pluralité de nœuds d'approbation dans le réseau distribué, la demande comprenant des informations d'identification du intelligent contrat ;
l'unité de réception est en outre configurée pour :
recevoir un résultat d'exécution qui est envoyé par chacun de la pluralité de nœuds d'approbation selon la demande ;
l'unité de vérification est en outre configurée pour :
vérifier si la pluralité de résultats d'exécution reçus de la pluralité de nœuds d'approbation satisfont la politique de vérification, la vérification comprenant des numéros de version de vérification et des données qui se trouvent dans la pluralité de résultats d'exécution reçus depuis la pluralité de nœuds d'approbation et qui sont générés par le programme autre que la condition restrictive ; et
la seconde unité d'envoi est en outre configurée pour :
lorsque la pluralité de résultats en cours d'exécution reçus depuis la pluralité de nœuds d'approbation répondent à la politique de vérification, envoyer la pluralité de résultats d'exécution à un client.

13. Appareil selon la revendication 12, dans lequel la seconde unité est en outre configurée pour :
avant l'envoi de la demande pour simuler l'exécution du contrat intelligent à la pluralité de nœuds d'approbation dans le réseau distribué, envoyer des programmes du contrat intelligent à la pluralité de nœuds d'approbation ;
l'unité de réception est en outre configurée pour :
recevoir un programme qui est de la condition restrictive et qui est envoyé par la pluralité de nœuds d'approbation sur la base des programmes du contrat intelligent ; et
la seconde unité d'envoi est en outre configurée pour :
envoyer le programme de la condition restrictive à tous les nœuds de traitement dans le réseau distribué.

14. Appareil d'exécution d'un contrat intelligent, dans lequel l'appareil comprend :
une unité d'envoi, configurée pour envoyer une demande pour simuler l'exécution du contrat intelligent à une pluralité de nœuds d'approbation dans un réseau distribué, la demande comprenant des informations d'identification du contrat intelligent ;
une unité de réception, configurée pour recevoir un résultat d'exécution qui est envoyé par chacun de la pluralité de nœuds d'approbation selon la demande ; et
une unité de vérification, configurée pour vérifier si la pluralité de résultats d'exécution reçus satisfont une politique de vérification, la vérification comprenant des numéros de version de vérification et des données qui se trouvent dans la pluralité de résultats d'exécution et qui sont générés par un programme autre qu'une condition restrictive dans le contrat intelligent, la condition restrictive indiquant une condition à satisfaire par les données de grand livre dans le réseau distribué lorsque le contrat intelligent est exécuté ; dans lequel
l'unité d'envoi est en outre configurée pour :
lorsque la pluralité de résultats d'exécution répondent à la politique de vérification, envoyer une transaction comprenant la pluralité de résultats d'exécution à un nœud de service de consensus.

15. Appareil selon la revendication 14, dans lequel l'unité d'envoi est en outre configurée pour:
avant l'envoi de la demande pour simuler l'exécution du contrat intelligent à la pluralité de nœuds d'approbation dans le réseau distribué, envoyer des programmes du contrat intelligent à la pluralité de nœuds d'approbation ;
l'unité de réception est en outre configurée pour :
recevoir un programme qui est de la condition restrictive et qui est envoyé par la pluralité de nœuds d'approbation sur la base des programmes du contrat intelligent ; et
l'unité d'envoi est en outre configurée pour :
envoyer le programme de la condition restrictive à tous les nœuds de traitement dans le réseau distribué.
